(19) **Europäisches Patentamt**
**European Patent Office**
**Office européen des brevets**

(11) **EP 4 290 907 A1**

(12) # EUROPEAN PATENT APPLICATION
published in accordance with Art. 153(4) EPC

(43) Date of publication:
**13.12.2023 Bulletin 2023/50**

(51) International Patent Classification (IPC):
*H04W 12/69* (2021.01)   *H04W 12/04* (2021.01)
*H04W 4/60* (2018.01)   *H04W 4/80* (2018.01)
*H04L 9/08* (2006.01)   *H04L 9/06* (2006.01)
*H04W 88/02* (2009.01)

(21) Application number: **22795974.9**

(22) Date of filing: **25.03.2022**

(52) Cooperative Patent Classification (CPC):
**H04L 9/06; H04L 9/08; H04W 4/60; H04W 4/80;
H04W 12/04; H04W 12/69; H04W 88/02;
Y02D 30/70**

(86) International application number:
**PCT/KR2022/004252**

(87) International publication number:
**WO 2022/231140 (03.11.2022 Gazette 2022/44)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **27.04.2021 KR 20210054661**

(71) Applicant: **Samsung Electronics Co., Ltd.
Suwon-si, Gyeonggi-do 16677 (KR)**

(72) Inventors:
• **AN, Junhwan
  Suwon-si Gyeonggi-do 16677 (KR)**
• **KIM, Suhyun
  Suwon-si Gyeonggi-do 16677 (KR)**
• **LEE, Gyujin
  Suwon-si Gyeonggi-do 16677 (KR)**

(74) Representative: **HGF
HGF Limited
1 City Walk
Leeds LS11 9DX (GB)**

(54) **ELECTRONIC DEVICE FOR TRANSMITTING AND/OR RECEIVING DEVICE IDENTIFICATION INFORMATION, AND OPERATION METHOD THEREOF**

(57)     An electronic device and a method for transmitting and/or receiving device identification information are provided. The electronic device may comprise a communication circuit and at least one processor, wherein the at least one processor may be configured to: detect a trigger event for advertisement packet transmission; generate an advertisement packet including device identification information for identifying the electronic device and at least one external electronic device which are registered by using the same account; and transmit the advertisement packet through the communication circuit. Various other embodiments may also be possible.

EP 4 290 907 A1

FIG.6

**Description**

**[Technical Field]**

The disclosure relates generally to an electronic device for transmitting and/or receiving device identification information and an operating method thereof.

**[Background Art]**

With the development of information communication technology, various wireless communication technologies and various services have been developed. In particular, a Bluetooth™ scheme, e.g., a Bluetooth™ low energy (BLE) scheme, which is a short-range communication scheme, has been actively used. In a BLE scheme, low capacity data may be transmitted and/or received with low power in a frequency band of about 2.4 GHz.

Electronic devices using a BLE scheme may operate in an active mode while performing a connection operation, a data transmission operation, and/or a data reception operation between the electronic devices, and may operate in a sleep mode at other times. So, power consumption of the electronic devices using a BLE scheme may be reduced compared to when a legacy Bluetooth™ scheme is used. Accordingly, a BLE scheme may be used in electronic devices with limited power supply, such as a health care device, a sensor device, or a wearable device (e.g., an earphone, a smart watch, or smart glasses).

In a wireless communication network, a continuity service is also provided, in which a continuous service is provided among a plurality of electronic devices registered using the same account, e.g., the same user account. In a continuity service, a BLE scheme may be used for identifying adjacent electronic devices.

**[Detailed Description of the Invention]**

**[Technical Problem]**

An electronic device using a BLE scheme may advertise presence of the electronic device by transmitting, for example, by broadcasting information about the electronic device using an advertisement packet, e.g., a BLE advertisement (ADV) packet. If another electronic device receives the BLE ADV packet, the other electronic device may detect that there is the electronic device that transmits the BLE ADV packet nearby.

If a continuity service is provided, a plurality of electronic devices may be registered using the same account, and the plurality of electronic devices registered using the same account may share information about an account. For example, if information about an account included in a BLE ADV packet is identicalto information about an account of the electronic device stored in the electronic device, the electronic device receiving the BLE ADV packet including the information about the account may detect that the electronic device which transmits the BLE ADV packet is an electronic device which is registered using the same account as the electronic device which receives the BLE ADV packet.

As described above, in the current continuity service, information about an account may be included in a BLE ADV packet and broadcasted, so each of a plurality of electronic devices registered using the same account may detect existence of external electronic devices registered using the same account. However, the current continuity service does not provide a separate scheme for uniquely identifying each of the plurality of electronic devices registered using the same account.

An aspect of the disclosure is to provide an electronic device for transmitting and/or receiving device identification information and an operating method thereof.

Another aspect of the disclosure is to provide an electronic device for transmitting and/or receiving device identification information for uniquely identifying a plurality of electronic devices registered using the same account if a continuity service is provided, and an operating method thereof in a wireless communication network.

**[Technical Solution]**

In accordance with an aspect of the disclosure, an electronic device is provided, which includes a communication circuit, and at least one processor operatively connected to the communication circuit, and the at least one processor is configured to detect a trigger event for advertisement packet transmission, in response to detecting the trigger event, generate an advertisement packet including device identification information for identifying the electronic device and at least one external electronic device registered using a same account, and transmit the advertisement packet via the communication circuit.

In accordance with another aspect of the disclosure, an electronic device is provided, which includes a communication circuit, and at least one processor operatively connected to the communication circuit, and the at least one processor is configured to receive an advertisement packet via the communication circuit, detect device identification information of an external electronic device that transmits the advertisement packet from the advertisement packet, check whether an account used for registration of the electronic device is identical to an account used for registration of the external electronic device based on the device identification information, and if the account used for registration of the electronic device is identical to the account used for registration of the external electronic device, identify that the external electronic device is one of at least one external electronic device registered using a same account based on the device identification information.

In accordance with another aspect of the disclosure, a method performed by a first electronic device is provided, which includes receiving an advertisement packet, detecting, from the advertisement packet, device identification information of an external electronic device that transmits the advertisement packet, determining whether an account used for registration of the electronic device is identical to an account used for registration of the external electronic device based on the device identification information, and if the account used for registration of the electronic device is identical to the account used for registration of the external electronic device, identifying that the external electronic device is one of at least one external electronic device registered using a same account based on the device identification information..

**[Description of the Drawings]**

The above and other aspects, features, and advantages of certain embodiments of the present disclosure will be more apparent from the following description taken in conjunction with the accompanying drawings, in which:

FIG. 1 is a block diagram illustrating an electronic device within a network environment according to various embodiments;
FIG. 2 illustrates an electronic device according to an embodiment;
FIG. 3 illustrates a wireless communication network according to an embodiment;
FIG. 4 illustrates a BLE ADV packet according to an embodiment;
FIG. 5 is a signal flow diagram illustrating an advertisement procedure in a wireless communication network according to an embodiment;
FIG. 6 is a signal flow diagram illustrating an advertisement procedure in a wireless communication network according to an embodiment;
FIG. 7 is a flowchart illustrating an electronic device receiving account information in a wireless communication network according to an embodiment;
FIG. 8 is a flowchart illustrating an electronic device method performing an advertisement procedure in a wireless communication network according to an embodiment;
FIG. 9 illustrates generation of a device identification key in a wireless communication network according to an embodiment;
FIG. 10 is a flowchart illustrating an electronic device method performing an advertisement procedure in a wireless communication network according to an embodiment; and
FIG. 11 illustrates interpreting of a device identification key in a wireless communication network according to an embodiment.

**[Mode for Invention]**

Hereinafter, various embodiments of the disclosure will be described in detail with reference to the accompanying drawings. In the following description of various embodiments of the disclosure, a detailed description of relevant known functions or configurations incorporated herein will be omitted when it is determined that the description may make the subject matter of various embodiments of the disclosure unnecessarily unclear.

The terms which will be described below are terms defined in consideration of the functions in the disclosure, and may be different according to users, intentions of the users, or customs. Therefore, the definitions of the terms should be made based on the contents throughout the specification.

Technical terms used herein are only used to describe specific embodiments, and are not intended to limit the disclosure. Alternatively, the technical terms used herein should be interpreted to have the same meaning as those commonly understood by a person skilled in the art to which the disclosure pertains, and should not be interpreted have excessively comprehensive or excessively restricted meanings unless particularly defined as other meanings. Alternatively, when the technical terms used herein are wrong technical terms that cannot correctly represent the idea of the disclosure, it should be appreciated that they are replaced by technical terms correctly understood by those skilled in the art. Alternatively, the general terms used herein should be interpreted as defined in dictionaries or interpreted in the context of the relevant part, and should not be interpreted to have excessively restricted meanings.

A singular expression used herein may include a plural expression unless they are definitely different in the context. Further, expressions such as "comprises" or "include", or the like should not be interpreted to necessarily include all elements or all operations described in the specification, and should be interpreted to be allowed to exclude some of them or further include additional elements or operations.

Terms including an ordinal number, such as expressions "a first" and "a second" may be used to describe various elements, but the corresponding elements should not be limited by such terms. These terms are used merely to distinguish between one element and any other element. For example, a first element may be termed a second element, and similarly, a second element may be termed a first element without departing from the scope of the disclosure.

When an element is referred to as being "connected" or "coupled" to another element, it may be connected or coupled directly to the other element, or any other element may be interposer between them. In contrast, when an element is referred to as being "directly connected" or "directly coupled" to another element, there are no element interposed between them.

Regardless of drawing signs, the same or like elements may be provided with the same reference numeral, and a repeated description thereof will be omitted. The accompanying drawings are presented merely to help easy understanding of the technical idea of the disclosure, and should not be construed to limit the technical idea of the disclosure. The technical idea of the disclosure should be construed to cover all changes, equivalents, and alternatives, in addition to the drawings.

Hereinafter, various embodiments of the disclosure will be described with reference to an electronic device, but the electronic device may also be referred to as a mobile station, a mobile equipment (ME), a user equipment (UE), a user terminal (UT), a subscriber station (SS), a wireless device, a handheld device, or an access terminal (AT). Generally, an electronic device may be a device having a communication function such as a mobile phone, a personal digital assistant (PDA), a smart phone, a wireless MODEM, or a notebook personal computer (PC).

In the descriptions of various embodiments of the disclosure below, reference is made to a standard specified by Bluetooth™ special interest group (SIG), but the disclosure is also applicable to other communication systems having a similar technical background without departing from the scope of the disclosure, and the modifications can be made based on a determination of those skilled in the art.

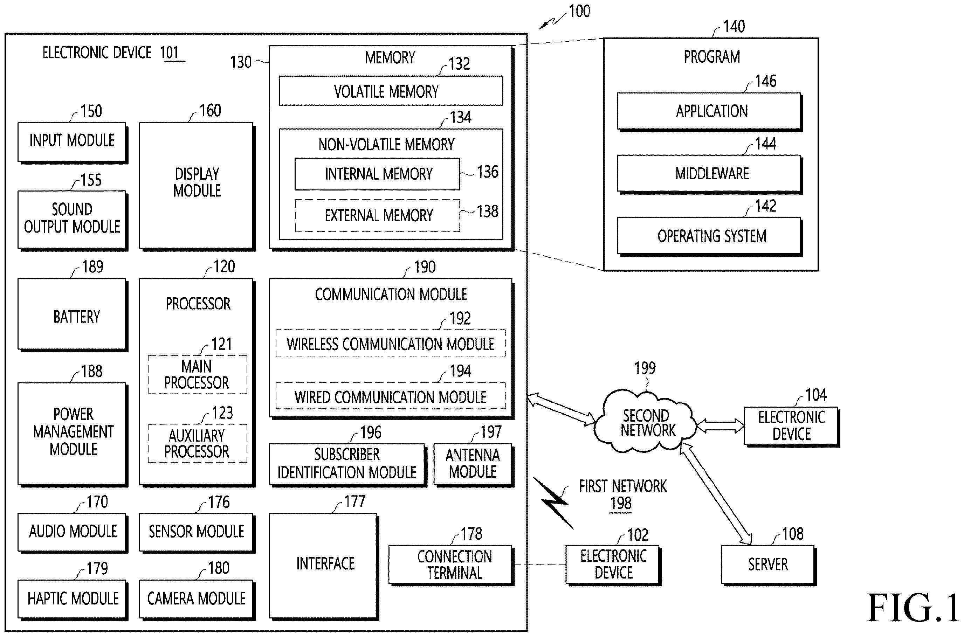

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control, for example, at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active (e.g., executing an application) state. According to an embodiment, the auxiliary processor 123 (e.g., an ISP or a CP) may be implemented as part of another component (e.g., the camera module 180 or the communication module 190) functionally related to the auxiliary processor 123. According to an embodiment, the auxiliary processor 123 (e.g., the NPU) may include a hardware structure specified for artificial intelligence model processing. An artificial intelligence model may be generated by machine learning. Such learning may be performed, e.g., by the electronic device 101 where the artificial intelligence model is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent DNN (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or an external electronic device (e.g., an electronic device 102 (e.g., a speaker or a headphone)) directly or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, ISPs, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more CPs that are operable independently from the processor 120 (e.g., the AP) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via the first network 198 (e.g., a short-range communication network, such as Bluetooth™, wireless-fidelity (Wi-Fi) direct, or IR data association (IrDA)) or the second network 199 (e.g., a long-range communication network, such as a legacy cellular network, a 5th generation (5G) network, a next-generation communication network, the Internet, or a computer network (e.g., LAN or wide area network (WAN))). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the SIM 196.

The wireless communication module 192 may support a 5G network, after a 4th generation (4G) network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a PCB, an RFIC disposed on a first surface (e.g., the bottom surface) of the PCB, or adjacent to the first surface and capable of supporting a designated high-frequency band (e.g., the mmWave band), and a plurality of antennas (e.g., array antennas) disposed on a second surface (e.g., the top or a side surface) of the PCB, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or MEC. In another embodiment, the external electronic device 104 may include an Internet-ofthings (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or two or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

A method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components or operations may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

The Bluetooth™ SIG has proposed a BLE scheme, in which data may be transmitted and/or received with low power.

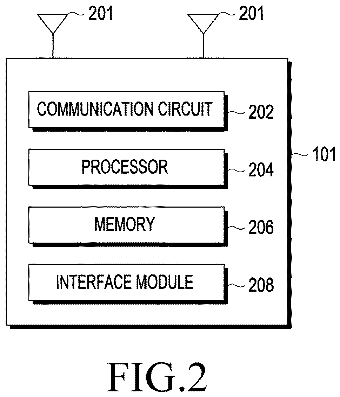

FIG. 2 illustrates an electronic device according to an embodiment.

Referring to FIG. 2, an electronic device (e.g., an electronic device 101 in FIG. 1) may be a device implementing a BLE scheme., The electronic device 101 may include a communication circuit 202 (e.g., a communication module 190 in FIG. 1) that transmits and receives signals with an external electronic device (e.g., an electronic device 102 or 104 in FIG. 1), e.g., a peer device by using one or more antennas 201. The communication circuit 202 may be capable of supporting both a Wi-Fi scheme and the BLE scheme.

The electronic device 101 may include a processor 204 (e.g., a processor 120 in FIG. 1), which may be implemented in one or more single-core processors or one or more multi-core processors, and a memory 206 (e.g., a memory 130 in FIG. 1), which stores instructions for an operation of the electronic device 101.

The electronic device 101 may also include an interface module 208 (e.g., an interface 177 in FIG. 1) that provides a wired and/or wireless interface for communicating with components outside a network.

The electronic device 101 may also include a plurality of communication circuits, one of the plurality of communication circuits may be a communication circuit based on a Wi-Fi scheme and another of the plurality of communication circuits may be a communication circuit based on a Bluetooth™ scheme, e.g., a BLE scheme. For example, the communication circuit 202 may be one of the plurality of communication circuits, and the communication circuit 202 may be based on the Wi-Fi scheme or based on the BLE scheme.

As described above, a continuity service may allow for continuous service through a plurality of electronic devices registered using the same account (e.g., registered in a server using the same account). In the continuity service, a BLE scheme may be used for identifying adjacent electronic devices. Herein, electronic devices registered using the same account may be referred to as "same account devices" and any one of the same account devices may be referred to as a "specific same account device".

Additionally, although a BLE scheme will be used for identifying adjacent electronic devices in a continuity service in the descriptions of the embodiments of the disclosure, the disclosure is not limited to a BLE scheme, and may utilize other short-range communication schemes such as a legacy Bluetooth™ scheme.

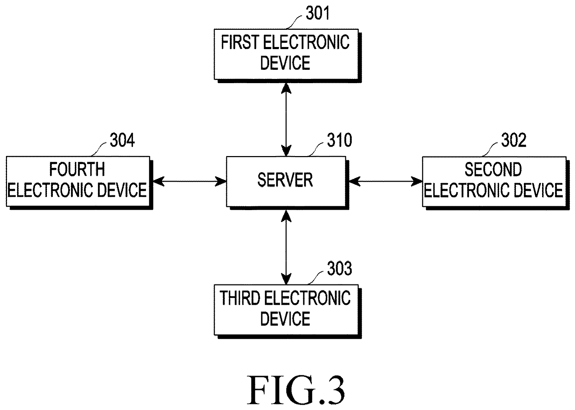

FIG. 3 illustrates a wireless communication network according to an embodiment.

Referring to FIG. 3, a wireless communication network mayinclude a plurality of electronic devices, e.g., an electronic device (e.g., an electronic device 101 in FIG. 1 or a first electronic device 301), and external electronic devices (e.g., an electronic device 102 in FIG. 1, or a second electronic device 302, a third electronic device 303, a fourth electronic device 304, and a server (e.g., a server 310)). In an embodiment, each of the first electronic device 301, the second electronic device 302, the third electronic device 303, and the fourth electronic device 304 may be an electronic device which uses a continuity service.

Each of the first electronic device 301, the second electronic device 302, the third electronic device 303, and the fourth electronic device 304 may include components which are at least partially identical to or similar to those of the electronic device 101 illustrated in FIG. 1, and may perform operations which are at least partially identical to or similar to those of the electronic device 101 illustrated in FIG. 1. Each of the first electronic device 301, the second electronic device 302, the third electronic device 303, and the fourth electronic device 304 may be one of various types of electronic devices, e.g., a phone (e.g., a smart phone), a tablet, a PC, or a wearable device.

The first electronic device 301, the second electronic device 302, the third electronic device 303, and the fourth electronic device 304 may communicate based on the BLE scheme, and may be registered by using the same account, e.g., the same user account. Accordingly, the continuity service may be provided among the first electronic device 301, the second electronic device 302, the third electronic device 303, and the fourth electronic device 304. The first electronic device 301, the second electronic device 302, the third electronic device 303, and the fourth electronic device 304 may be same account devices.

The server 310 (e.g., a server 108 in FIG. 1) may manage and/or control the wireless communication network, and may store and manage information related to each of the first electronic device 301, the second electronic device 302, the third electronic device 303, and the fourth electronic device 304.

In the continuity service provided in the wireless communication network, the BLE scheme may be used for recognizing adjacent electronic devices. Upon detecting occurrence of a trigger event which triggers transmission of an advertisement packet, e.g., a BLE ADV packet, an electronic device, e.g., the first electronic device 301 may transmit the BLE ADV packet. In an embodiment, the first electronic device 301 may transmit the BLE ADV packet upon detecting the trigger event for the BLE ADV packet transmission. Examples of a trigger event include the following:

(1) Start search for neighbor electronic devices
A trigger event may occur if an electronic device starts searching for external electronic devices, e.g., neighbor electronic devices.
(2) File sharing option on/off

A trigger event may occur if an electronic device turns on or off a file sharing option.

(3) Screen on/off

A trigger event may occur if an electronic device turns on or off a screen.

(4) Wi-Fi on/off/connected

A trigger event may occur if an electronic device turns on or off Wi-Fi, or if the electronic device is connected to the Wi-Fi, e.g., if the electronic device is in a Wi-Fi connected state.

(5) Clipboard copy

A trigger event may occur if an electronic device performs a clipboard copy operation.

(6) Call state changed (e.g., idle/ringing/off hook)

A trigger event may occur if a call state changes in an electronic device. For example, the trigger event may occur if the call state changes to an idle state, a ringing state, or an off-hook state.

(7) Change of connection information of a wearable device being used

A trigger event may occur if connection information for a wearable device being used in an electronic device changes.

(8) Change of wearing information of a wearable device being used

A trigger event may occur if wearing information for a wearable device being used in an electronic device changes.

(9) Use of an application in an electronic device

A trigger event may occur if an electronic device uses an application such as, e.g., the Internet, a contact, or a note.

(10) Periodic transmission

A trigger event may occur every period set in an electronic device. A period in which the trigger event occurs may be variably set in a wireless communication network.

A trigger event is not limited to the above-described example, and may include other trigger events.

External electronic devices, e.g., the second electronic device 302, the third electronic device 303, and the fourth electronic device 304, may receive the BLE ADV packet transmitted from the first electronic device 301.

The first electronic device 301 may advertise presence of the first electronic device 301 by broadcasting the BLE ADV packet, and the second electronic device 302, the third electronic device 303, and the fourth electronic device 304 may receive the BLE ADV packet broadcasted by the first electronic device 301 to detect that an electronic device, e.g., the first electronic device 301, which broadcasts the BLE ADV packet exists nearby.

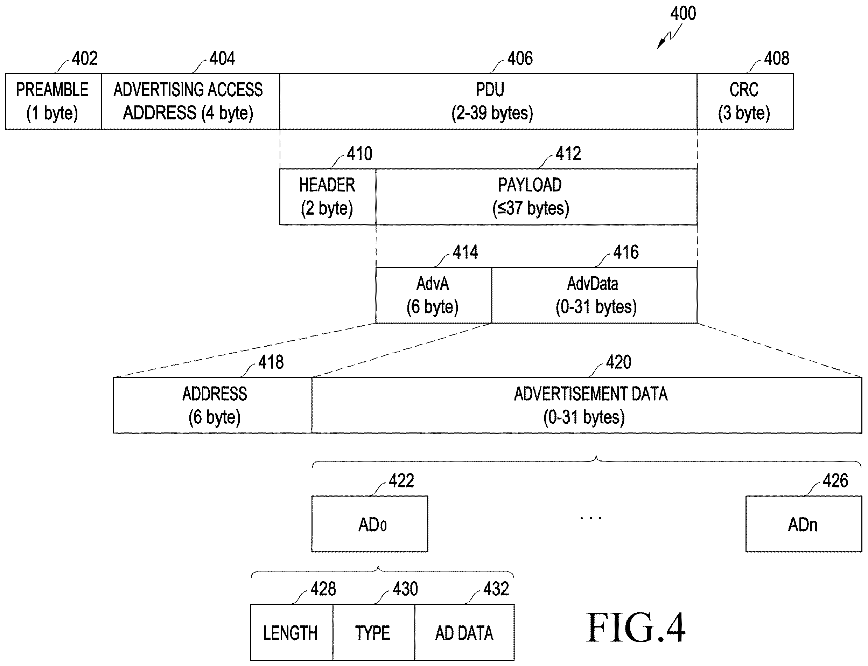

FIG. 4 illustrates a BLE ADV packet according to an embodiment.

Referring to FIG. 4, a BLE ADV packet 400 includes a preamble field 402, an advertising access address field 404, a packet data unit (PDU) field 406, and a cyclic redundancy check (CRC) field 408.

The preamble field 402 may include information used for an external electronic device (e.g., an electronic device 102 in FIG. 1, and a second electronic device 302, a third electronic device, and a fourth electronic device 304 in FIG. 3)that receives the BLE ADV packet 400 to perform frequency synchronization and/or symbol timing estimation. The preamble field 402 may be implemented , for example, with one byte. The preamble field 402 may include a fixed sequence of one byte in length consisting of alternating a bit value 0 and a bit value 1 based on address information included in the advertising access address field 404. For example, the preamble field 402 may include "10101010" if the address information included in the advertising access address field 404 starts with 1, and may include "01010101" if the address information included in the advertising access address field 404 starts with 0.

The advertising access address field 404 may include address information related to the BLE ADV packet 400, and the advertising access address field 404 may be implemented with, e.g., 4 bytes.

The PDU field 406 may have a variable length from a minimum of 2 bytes to a maximum of 39 bytes. The PDU field 406 may include a header field 410 and a payload field 412.

The header field 410 may include information indicating a type and length of data included in the payload field 412. The header field 410 may include information indicating that a type of the data included in the payload field 412 is advertisement data. The header field 410 may be implemented with, for example, 2 bytes.

The payload field 412 may have a variable length of 37 bytes or less, and may include an advertisement access (AdvA) field 414 and an advertisement data (AdvData) field 416.

The AdvA field 414 may include an address 418 of an electronic device (e.g., an electronic device 101 in FIG. 1 and a first electronic device 301 in FIG. 3) that transmits the BLE ADV packet 400. The address 418 of the electronic device may be a medium access control (MAC) address of the electronic device or a resolvable private address (RPA). The RPA may be implemented with, for example, 48 bits, and may be divided into a first part, e.g., prand that is a 24-bit random part, and a second part, e.g., a hash that is a 24-bit hash part. A least significant octet of the RPA may be a least significant octet of the hash, and a most significant octet of the RPA may be a most significant octet of the prand.

The AdvData field 416 may include advertisement data 420 of up to 31 bytes, and includes one or more advertising data (AD) elements, e.g., an $AD_0$ element 422 to an $AD_N$ element 426.

Each of the one or more AD elements includes a length field, a type field, and an AD data field. FIG. 4 exemplifies a length field 428, a type field 430, and an AD data field 432 included in the $AD_0$ element 422. Although not shown in FIG. 4, the AD$_N$ element 426 may include a length field, a type field, and an AD data field, like the AD$_0$ element 422.

The length field 428 may include length information of the AD data field 432, and the type field 430 may include type information of data included in the AD data field 432. The type field 432 may include information indicating one of data types as shown in Table 1 below.

Table 1

| Data type | Description |
|---|---|
| Universally unique identifier (UUID) | Identifier information of a service provided by an electronic device |
| Manufacturer specific data | May include at least one of data defined by manufacturer of an electronic device or data set by an electronic device. |
| Transmit power level | Information about a transmit power level used for an electronic device to transmit a BLE ADV packet |
| Slave connection interval range | Connection interval range to be used by an external electronic device receiving a BLE ADV packet |
| Service solicitation | Information about one or two or more services for receiving through an external electronic device, and it is used for inviting the external electronic device for connection. |
| Service data | Data associated with a service provided by an electronic device (may include a service UUID) |
| Uniform resource identifier (URI) | URI associated with a service provided by an electronic device |

The AD data field 432 may include information, e.g., an account key, which electronic devices, e.g., the same account devices, which are registered by using the same account share.

The CRC field 408 may include information used for an external electronic device to detect an error for a received BLE ADV packet 400, and the CRC field 408 may be implemented with, for example, 3 bytes.

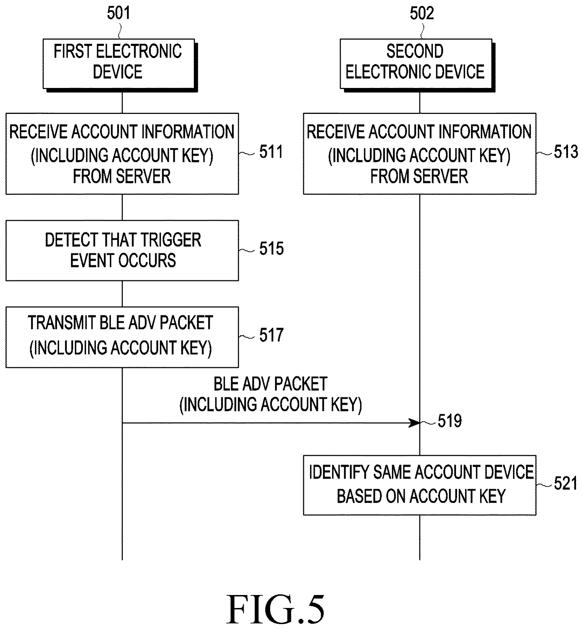

FIG. 5 is a signal flow diagram illustrating an advertisement procedure in a wireless communication network according to an embodiment.

Referring to FIG. 5, if a continuity service is provided in a wireless communication network supporting a BLE scheme, a plurality of electronic devices registered using the same account may exist in the continuity service. The plurality of electronic devices registered by using the same account, for example, the same account devices may have the same information, e.g., information (e.g., the same account key ) about the same account (hereinafter, referred to as "account information"). In an embodiment, a plurality of electronic devices may exist in the wireless communication network, and it will be assumed that a first electronic device 501 (e.g., an electronic device 101 in FIG. 1 and a first electronic device 301 in FIG. 3) and a second electronic device 502 (e.g., an electronic device 102 in FIG. 1 and a second electronic device 302 in FIG. 3) among the plurality of electronic devices are registered by using the same account.

In operation 511, a first electronic device 501 mayreceive, from a server (e.g., a server 108 in FIG. 1 and a server 310 in FIG. 3) that manages the continuity service, account information about an account that the first electronic device 501 uses for registration. The account information may include an account key uniquely assigned to the account.

In operation 513, the second electronic device 502 may receive, from the server, account information about an account that the second electronic device 502 uses for registration. In FIG. 5, as it is assumed that the first electronic device 501 and the second electronic device 502 are registered by using the same account, the account information received by the first electronic device 501 and the account information received by the second electronic device 502 may be the same. Although an account key has been described as an example of account information, the account information may include various information for identifying an account instead of or in addition to the account key.

In operation 515, the first electronic device 501 may detect that a trigger event which is an event for transmitting a BLE ADV packet occurs.

The first electronic device 501 detecting the trigger event may transmit (e.g., may broadcast) a BLE ADV packet. The BLE ADV packet broadcasted by the first electronic device 501 includes, e.g., in an AdvData field, account information, e.g., an account key, about the account that the first electronic device 501 uses for registration. Alternatively, the account key may be included in another field in the BLE ADV packet.

The BLE ADV packet broadcasted from the first electronic device 501 may be received by one or more electronic devices included in the wireless communication network.

In operation 519, the second electronic device 502 may receive the BLE ADV packet broadcasted from the first electronic device 501.

In operation 521, the second electronic device 502 may identify that the account key included in an AdvData field in the received BLE ADV packet is the same as the account key of the account that the second electronic device 502 uses for registration, and therefore, may identify the first electronic device 501 as a same account device based on the account key.

As described in FIG. 5, if there are a plurality of electronic devices registered using the same account in a wireless communication network, the plurality of electronic devices registered using the same account may use the same account key. Accordingly, if one of the plurality of electronic devices receives a BLE ADV packet including the same account key as stored by the electronic device itself, the electronic device may identify that an external electronic device that transmitted the corresponding BLE ADV packet is registered using the same account as the electronic device.

Based on this scheme, a plurality of electronic devices registered using the same account may identify that the plurality of electronic devices are registered using the same account. However, although the plurality of electronic devices registered using the same account may identify that the plurality of electronic devices registered using the same account, it may be difficult to identify that a specific electronic device is which one among the plurality of electronic devices registered using the same account.

In a wireless communication network, two electronic devices may share a mutual recognition key, e.g., Bluetooth™ identity resolving key (IRK), which is defined in a Bluetooth™ standard. The Bluetooth™ IRK may be shared through a pairing procedure between the two electronic devices. Each of the electronic devices that have performed the pairing procedure may transmit a Bluetooth™ IRK of each of the electronic devices to a server so that the server may register the Bluetooth™ IRK of each of the electronic devices, or may store the Bluetooth™ IRKs without separately registering the Bluetooth™ IRKs in the server. Additionally, Bluetooth™ IRKs may be stored in electronic devices in advance when the electronic devices are manufactured, without having to perform a pairing procedure between the electronic devices.

An electronic device receiving a BLE ADV packet may identify that an external electronic device that transmits the BLE ADV packet is which electronic device among a plurality of electronic devices registered using the same account as the electronic device by interpreting an address, e.g., a random address (e.g., an RPA) of the external electronic device by using a Bluetooth™ IRK of the external electronic device.

However, a Bluetooth™ IRK is a key shared through a pairing procedure between two electronic devices, and the pairing procedure itself may not be performed depending on a situation of an electronic device. The electronic device that does not perform the pairing procedure may not obtain a Bluetooth™ IRK of an external electronic device.

A Bluetooth™ IRK may be preset in an electronic device when the electronic device is manufactured even if a pairing procedure between electronic devices is not performed. However, if a manufacturer of the electronic device does not support the Bluetooth™ IRK, the Bluetooth™ IRK may not be set in the electronic device.

If electronic devices are not capable of obtaining a Bluetooth™ IRK, e.g., if the electronic devices do not perform a pairing procedure, or if the Bluetooth™ IRK is not set in the electronic devices at the time of manufacture, the electronic devices may not register the Bluetooth™ IRK in a server.

An electronic device may transmit a BLE ADV packet including an identifier (ID) of the electronic device. The ID of the electronic device transmitting the BLE ADV packet may be included in, for example, , an AdvData field in the BLE ADV packet. However, the ID of the electronic device may also be included in another field in the BLE ADV packet.

An external electronic device receiving the BLE ADV packet may identify the ID of the electronic device included in the BLE ADV packet, and identify that the external electronic device is which electronic device among a plurality of electronic devices registered using the same account as the electronic device based on the identified ID of the electronic device.

However, if the ID of the electronic device transmitting the BLE ADV packet is included in the BLE ADV packet, there is a possibility of tracking the electronic device and a problem may occur in terms of privacy of the electronic device.

Accordingly, an aspect of the disclosure is to provide a device and method for uniquely identifying a plurality of electronic devices registered using the same account, without causing an issue in terms of security. Accordingly, an apparatus and method are provided for uniquely identifying a plurality of electronic devices registered using the same account by making the plurality of electronic devices, e.g., the same account devices, which are registered using the same account perform an advertisement procedure based on account information stored in a server.

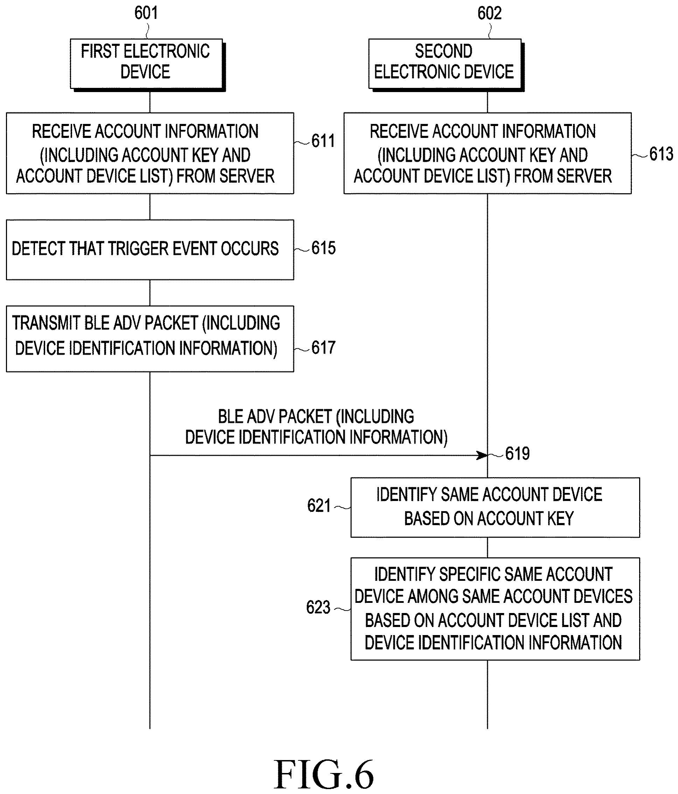

FIG. 6 is a signal flow diagram illustrating an advertisement procedure in a wireless communication network according to an embodiment.

Referring to FIG. 6, if a continuity service is provided in a wireless communication network supporting a BLE scheme, a plurality of electronic devices registered by using the same account may exist in the continuity service, and the plurality of electronic devices, for example, the same account devices, which are registered by using the same account, e.g., the same user account may have the same information, e.g., the same account information (e.g., the same account key). In an embodiment, a plurality of electronic devices may exist in the wireless communication network, and it will be assumed that a first electronic device 601 (e.g., an electronic device 101 in FIG. 1 and a first electronic device 301 in FIG. 3) and a second electronic device 602 (e.g., an electronic device 102 in FIG. 1 and a second electronic device 302 in FIG. 3) among the plurality of electronic devices are registered using the same account.

In operation 611, the first electronic device 601 may receive account information of an account that the first electronic device 601 uses for registration from a server (e.g., a server 108 in FIG. 1 or a server 310 in FIG. 3) that manages the continuity service. The account information may include an account key uniquely assigned to an account, and an account device list which is a list for electronic devices, e.g., the same account devices, which are registered to the account. The account device list may include device-specific information of each of a plurality of electronic devices registered using the same account. The device-specific information may include at least one of a name of an electronic device, a model name of the electronic device, a Wi-Fi MAC address of the electronic device, a Bluetooth™ MAC address of the electronic device, a serial number of the electronic device, a nickname of the electronic device, a type of the electronic device, an icon of the electronic device, an image of the electronic device, a description for the electronic device, location information of the electronic device, or a Bluetooth™ IRK of the electronic device. The type of the electronic device may indicate, for example, any one of a phone (e.g., a smart phone), a PC, a tablet, or a wearable device.

In operation 613, the second electronic device 602 may receive, from the server, account information of the account that second electronic device 602 uses for registration. Herein, it is assumed that the first electronic device 601 and the second electronic device 602 are registered using the same account, so the account information received by the first electronic device 601 and the account information received by the second electronic device 602 may be the same.

The account key and the account device list have are described herein as an example of the account information, but the account information may include not only the account key and the account device list but also various other information related to the account.

Additionally, a case in which the plurality of electronic devices registered using the same account receive the same account information from a server has been described as an example, butthe server may configure an account device list included in account information differently for each electronic device. For example, the server does not include device-specific information for all of the plurality of electronic devices registered using the same account in the account device list, but the server may configure the account device list by excluding device-specific information of an electronic device which is a target to which the server transmits account information among the plurality of electronic devices, and only including device-specific information of the remaining electronic devices.

In an embodiment, a time point at which the first electronic device 601 and/or the second electronic device 602 may receive the account information from the server may be a time point at which a designated event occurs in the first electronic device 601 and/or the second electronic device 602. For example, the time point at which the designated event occurs may be a time point at which the first electronic device 601 and/or the second electronic device 602 are registered in the server, a time point at which the first electronic device 601 and/or the second electronic device 602 move to a designated location, or a time point at which the first electronic device 601 and/or the second electronic device 602 perform a designated service.

In operation 615, the first electronic device 601 may detect that a trigger event which is an event for transmitting a BLE ADV packet occurs.

In operation 617, in response to detecting the trigger event, the first electronic device 601 may transmit (e.g., may broadcast) an advertisement packet, e.g., a BLE ADV packet. The BLE ADV packet broadcasted by the first electronic device 601 may include device identification information of the first electronic device 601. The device identification information may be information which allows to uniquely identify each of the same account devices registered using the same account. Although FIG. 6 illustrates an example in which the device identification information of the first electronic device 601 is transmitted through a BLE ADV packet, another form of message may be used as long as it may be received by the same account devices registered using the same account as the first electronic device 601.

The device identification information may include an account key and/or a device identification key. Whether the device identification information includes the account key or both the account key and the device identification key may be determined according to whether an electronic device transmitting a BLE ADV packet has a Bluetooth™ IRK. The device identification information may be included in, for example, an AdvData field in the BLE ADV packet or in another field in the BLE ADV packet.

The BLE ADV packet broadcasted from the first electronic device 601 may be received by a plurality of electronic devices included in the wireless communication network.

In operation 619, the second electronic device 602 may receive the BLE ADV packet broadcasted from the first electronic device 601.

In operation 621, the second electronic device 602 may identify that the first electronic device 601 that transmits the BLE ADV packet is registered using the same account as the second electronic device 602 based on the device identification information included in the AdvData field. If the account key included in the device identification information included in the AdvData field in the received BLE ADV packet is identical to an account key stored by the second electronic device 602, the second electronic device 602 may identify that the first electronic device 601 is registered using the same account as the second electronic device 602.

As described in operation 621, the second electronic device 602 may identify electronic devices, e.g., the same account devices, which are registered using the same account as the second electronic device 602 based on an account key value.

In operation 623, the second electronic device 602 may identify that the first electronic device 601 is which electronic device among the plurality of electronic devices registered using the same account as the second electronic device 602 based on the device identification information and the account device list received from the server. As described in operation 623, the second electronic device 602 may identify the first electronic device 601 as a specific account device among the plurality of electronic devices registered using the same account as the second electronic device 602 based on the device identification information and the account device list.

According to various embodiments of the disclosure, an electronic device (e.g., an electronic device 101 in FIG. 1, a first electronic device 301 in FIG. 3, or a first electronic device 601 in FIG. 6) may comprise a communication circuit 202, and at least one processor 204 operatively connected to the communication circuit 202. The at least one processor 204 may be configured to: detect that a trigger event which triggers advertisement packet transmission occurs, generate an advertisement packet including device identification information for identifying the electronic device (e.g., the electronic device 101 in FIG. 1, the first electronic device 301 in FIG. 3, or the first electronic device 601 in FIG. 6) and at least one external electronic device (e.g., an electronic device 102 in FIG. 1, a second electronic device 302, a third electronic device 303, or a fourth electronic device 304 in FIG. 3, or a second electronic device 602 in FIG. 6), registered using a same account, and transmit the advertisement packet via the communication circuit 202.

According to various embodiments of the disclosure, the at least one processor 204 may be further configured to: receive, via the communication circuit 202 from another external electronic device (e.g., a server 108 in FIG. 1 or a server 310 in FIG, 3), an account device list including an account key of the same account and device-specific information of the at least one external electronic device (e.g., the electronic device 102 in FIG. 1, the second electronic device 302, the third electronic device 303, or the fourth electronic device 304 in FIG. 3, or the second electronic device 602 in FIG. 6).

According to various embodiments of the disclosure, the at least one processor 204 may be further configured to: transmit, via the communication circuit 202 to the other external electronic device (e.g., the server 108 in FIG. 1 or the server 310 in FIG, 3), an identity resolving key (IRK) which is obtained according to performance of a pairing procedure of the electronic device (e.g., the electronic device 101 in FIG. 1, the first electronic device 301 in FIG. 3, or the first electronic device 601 in FIG. 6).

According to various embodiments of the disclosure, the device identification information may include the account key.

According to various embodiments of the disclosure, the device identification information may include a device identification key which is generated based on the account key and device-specific information of the electronic device (e.g., the electronic device 101 in FIG. 1, the first electronic device 301 in FIG. 3, or the first electronic device 601 in FIG. 6).

According to various embodiments of the disclosure, the at least one processor 204 may be configured to: generate a device key by applying a key source which is included in the device-specific information of the electronic device (e.g., the electronic device 101 in FIG. 1, the first electronic device 301 in FIG. 3, or the first electronic device 601 in FIG. 6) and used as a source for generating the device identification key to a hash function, apply the device key and a random number to an encryption function to generate an encryption key, and generate the device identification key based on the random value and the encryption key.

According to various embodiments of the disclosure, an electronic device (e.g., an electronic device 102 in FIG. 1, a second electronic device 302 in FIG. 3, or a second electronic device 602 in FIG. 6) may comprise a communication circuit 202 and at least one processor 204 operatively connected to the communication circuit 202. The at least one processor 204 may be configured to: receive an advertisement packet via the communication circuit 202, detect device identification information of an external electronic device (e.g., an electronic device 101 in FIG. 1, a first electronic device 301 in FIG. 3, or a first electronic device 601 in FIG. 6) which transmits the advertisement packet from the advertisement packet, check whether an account used for registration of the electronic device (e.g., the electronic device 102 in FIG. 1, the second electronic device 302 in FIG. 3, or the second electronic device 602 in FIG. 6) is identical to an account used for registration of the external electronic device (e.g., the electronic device 101 in FIG. 1, the first electronic device 301 in FIG. 3, or the first electronic device 601 in FIG. 6) based on the device identification information, and if the account used for registration of the electronic device (e.g., the electronic device 102 in FIG. 1, the second electronic device 302 in FIG. 3, or the second electronic device 602 in FIG. 6) is identical to the account used for registration of the external electronic device (e.g., the electronic device 101 in FIG. 1, the first electronic device 301 in FIG. 3, or the first electronic device 601 in FIG. 6), identify that the external electronic device (e.g., the electronic device 101 in FIG. 1, the first electronic device 301 in FIG. 3, or the first electronic device 601 in FIG. 6) is one of at least one external electronic device (e.g., the first electronic device 301, a third electronic device 303, or a fourth electronic device 304 in FIG. 3) registered using the same account based on the device identification information.

According to various embodiments of the disclosure, the at least one processor 204 may be further configured to: receive, via the communication circuit 202 from another external electronic device (e.g., a server 108 in FIG. 1 or a server 310 in FIG. 3), an account device list including an account key of the same account and device-specific information of the at least one external electronic device (e.g., the first electronic device 301, the third electronic device 303, or the fourth electronic device 304 in FIG. 3).

According to various embodiments of the disclosure, the at least one processor 204 may be configured to: check whether a device identification key generated based on device-specific information of the external electronic device (e.g., the electronic device 101 in FIG. 1, the first electronic device 301 in FIG. 3, or the first electronic device 601 in FIG. 6) is included in the device identification information, if the device identification key of the external electronic device (e.g., the electronic device 101 in FIG. 1, the first electronic device 301 in FIG. 3, or the first electronic device 601 in FIG. 6) is not included in the device identification information, interpret an address of the external electronic device (e.g., the electronic device 101 in FIG. 1, the first electronic device 301 in FIG. 3, or the first electronic device 601 in FIG. 6) included in the advertisement packet by using an identity resolving key (IRK) included in each of device-specific information of the at least one external electronic device

(e.g., the first electronic device 301, the third electronic device 303, or the fourth electronic device 304 in FIG. 3), and if an IRK associated with the address of the external electronic device (e.g., the electronic device 101 in FIG. 1, the first electronic device 301 in FIG. 3, or the first electronic device 601 in FIG. 6) is detected, identify an external electronic device (e.g., the first electronic device 301, the third electronic device 303, or the fourth electronic device 304 in FIG. 3) which corresponds to the detected IRK among the at least one external electronic device (e.g., the first electronic device 301, the third electronic device 303, or the fourth electronic device 304 in FIG. 3) as the external electronic device (e.g., the electronic device 101 in FIG. 1, the first electronic device 301 in FIG. 3, or the first electronic device 601 in FIG. 6), and wherein each of IRKs of the at least one external electronic device (e.g., the first electronic device 301, the third electronic device 303, or the fourth electronic device 304 in FIG. 3) is obtained according to performance of a pairing procedure of each of the at least one external electronic device (e.g., the first electronic device 301, the third electronic device 303, or the fourth electronic device 304 in FIG. 3).

According to various embodiments of the disclosure, the at least one processor 204 may be configured to: if a hash value generated by applying a part of the address of the external electronic device (e.g., the electronic device 101 in FIG. 1, the first electronic device 301 in FIG. 3, or the first electronic device 601 in FIG. 6) and the IRK of each of the at least one external electronic device (e.g., the first electronic device 301, the third electronic device 303, or the fourth electronic device 304 in FIG. 3) to a hash function matches another part of the address of the external electronic device (e.g., the electronic device 101 in FIG. 1, the first electronic device 301 in FIG. 3, or the first electronic device 601 in FIG. 6), determine that a corresponding IRK is associated with the address of the external electronic device (e.g., the electronic device 101 in FIG. 1, the first electronic device 301 in FIG. 3, or the first electronic device 601 in FIG. 6).

According to various embodiments of the disclosure, the electronic device (e.g., the electronic device 102 in FIG. 1, the second electronic device 302 in FIG. 3, or the second electronic device 602 in FIG. 6) may further comprise a display module (e.g., a display module in FIG. 1), and the at least one processor 204 may be configured to: display device-specific information of the identified external electronic device (e.g., the first electronic device 301, the third electronic device 303, or the fourth electronic device 304 in FIG. 3) via the display module (e.g., the display module in FIG. 1).

According to various embodiments of the disclosure, the at least one processor 204 may be configured to: check whether a device identification key generated based on device-specific information of the external electronic device (e.g., the electronic device 101 in FIG. 1, the first electronic device 301 in FIG. 3, or the first electronic device 601 in FIG. 6) is included in the device identification information, if the device identification key of the external electronic device (e.g., the electronic device 101 in FIG. 1, the first electronic device 301 in FIG. 3, or the first electronic device 601 in FIG. 6) is included in the device identification information, generate a device key by applying, to a hash function, a key source which is included in device-specific information of each of the at least one external electronic device (e.g., the first electronic device 301, the third electronic device 303, or the fourth electronic device 304 in FIG. 3) and used as a source for generating a device identification key of each of the at least one external electronic device (e.g., the first electronic device 301, the third electronic device 303, or the fourth electronic device 304 in FIG. 3), apply the generated device key and a random number to an encryption function to generate an encryption key, check whether a part of the generated encryption key is identical to a part of an encryption key included in the device identification key in the device identification information, and if the part of the generated encryption key is identical to the part of the encryption key included in the device identification key in the device identification information, identify an external electronic device (e.g., the first electronic device 301, the third electronic device 303, or the fourth electronic device 304 in FIG. 3) which corresponds to the generated encryption key as the external electronic device (e.g., the electronic device 101 in FIG. 1, the first electronic device 301 in FIG. 3, or the first electronic device 601 in FIG. 6) which transmits the device identification information.

According to various embodiments of the disclosure, the electronic device (e.g., the electronic device 102 in FIG. 1, the second electronic device 302 in FIG. 3, or the second electronic device 602 in FIG. 6) may further comprise a display module (e.g., a display module in FIG. 1), and the at least one processor 204 may be configured to: display device-specific information of the identified external electronic device (e.g., the first electronic device 301, the third electronic device 303, or the fourth electronic device 304 in FIG. 3) via the display module (e.g., the display module in FIG. 1).

According to various embodiments of the disclosure, the at least one processor 204 may be configured to: if an account key included in the device identification information is identical to an account key of the account used for registration of the electronic device (e.g., the electronic device 102 in FIG. 1, the second electronic device 302 in FIG. 3, or the second electronic device 602 in FIG. 6), determine that the account used for registration of the electronic device (e.g., the electronic device 102 in FIG. 1, the second electronic device 302 in FIG. 3, or the second electronic device 602 in FIG. 6) is identical to the account used for registration of the external electronic device (e.g., the electronic device 101 in FIG. 1, the first electronic device 301 in FIG. 3, or the first electronic device 601 in FIG. 6).

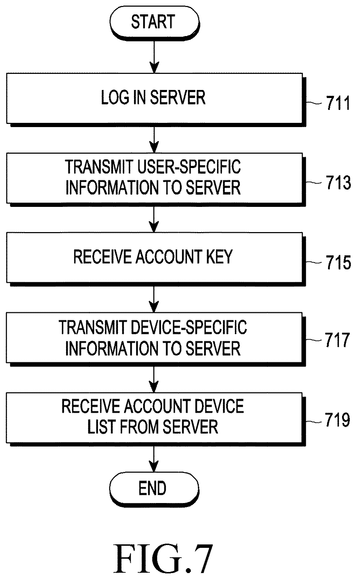

FIG. 7 is a flowchart illustrating an electronic device receiving account information in a wireless communication network according to an embodiment.

Referring to FIG. 7, in operation 711, an electronic device (e.g., an electronic device 101 and an electronic device 102 in FIG. 1, a first electronic device 301 to a fourth electronic device 304 in FIG. 3, and a first electronic device 601 and a second electronic device 602 in FIG. 6) may log in to a server (e.g., a server 108 in FIG. 1 or a server 310 in FIG. 3) included in a wireless communication network.

In operation 713, the electronic device may transmit user-specific information to the server. The user-specific information represents unique information about an account that may be used in an account-based service, and may include at least one of an account certificate, an account encryption key, an account name, an account image, contact information, or location information.

In operation 715, the electronic device may receive, from the server, an account key of an account in which the electronic device is included.

In operation 717, the electronic device may transmit device-specific information of the electronic device to the server. A Bluetooth™ IRK may be obtained through a pairing procedure between electronic devices, e.g., between the electronic device and an external electronic device. However, if the pairing procedure is not performed, the electronic device may not obtain the Bluetooth™ IRK, and in this case, the electronic device may not store the Bluetooth™ IRK. The Bluetooth™ IRK may be previously stored in the electronic device when the electronic device is manufactured, even if the pairing procedure between the electronic device and the external electronic device is not performed. However, if a manufacturer of the electronic device does not support the Bluetooth™ IRK, the electronic device may not obtain the Bluetooth™ IRK, and in this case, the electronic device may not store the Bluetooth™ IRK.

If the electronic device does not store the Bluetooth™ IRK, the device-specific information of the electronic device transmitted from the electronic device to the server in operation 717 may include at least one of a name of the electronic device, a model name of the electronic device, a Wi-Fi MAC address of the electronic device, a Bluetooth™ MAC address of the electronic device, a serial number of the electronic device, a nickname of the electronic device, a type of the electronic device, an icon of the electronic device, an image of the electronic device, a description for the electronic device, or location information of the electronic device

If the electronic device stores the Bluetooth™ IRK, the device-specific information of the electronic device transmitted from the electronic device to the server in operation 717 may include the Bluetooth™ IRK of the electronic device, and at least one of the name of the electronic device, the model name of the electronic device, the Wi-Fi MAC address of the electronic device, the Bluetooth™ MAC address of the electronic device, the serial number of the electronic device, the nickname of the electronic device, the type of the electronic device, the icon of the electronic device, the image of the electronic device, the description for the electronic device, or the location information of the electronic device.

Unique information of the electronic device (e.g., device-specific information) transmitted from the electronic device to the server may vary depending on whether the electronic device stores the Bluetooth™ IRK. If the electronic device stores the Bluetooth™ IRK, the unique information of the electronic device transmitted from the electronic device to the server may include the Bluetooth™ IRK. The electronic device may also store Bluetooth™ IRKs of external electronic devices paired with the electronic device as well as the Bluetooth™ IRK of the electronic device. If the electronic device stores the Bluetooth™ IRKs of the external electronic devices paired with the electronic device, the unique information of the electronic device may additionally include the Bluetooth™ IRKs of the external electronic devices.

If the electronic device does not store the Bluetooth™ IRK, the unique information of the electronic device transmitted from the electronic device to the server may not include the Bluetooth™ IRK.

In operation 719, the electronic device may receive, from the server, an account device list, which is a list for a plurality of electronic devices, e.g., the same account devices, which are registered using the same account as an account which the electronic device uses for registration. The account device list may include device-specific information for each of the plurality of electronic devices registered using the same account. The server may transmit the same account information to the plurality of electronic devices registered using the same account, so the plurality of electronic devices registered using the same account may receive the same account information from the server. In an embodiment, the server may differently configure an account device list included in account information per electronic device for the plurality of electronic devices registered using the same account. For example, the server does not include device-specific information for all of the plurality of electronic devices registered using the same account in the account device list, but the server may configure the account device list by excluding device-specific information of an electronic device which is a target to which the server transmits account information among the plurality of electronic devices , and including only device-specific information of the remaining electronic devices. In this case, even the plurality of electronic devices registered using the same account may receive differentiated account information from the server.

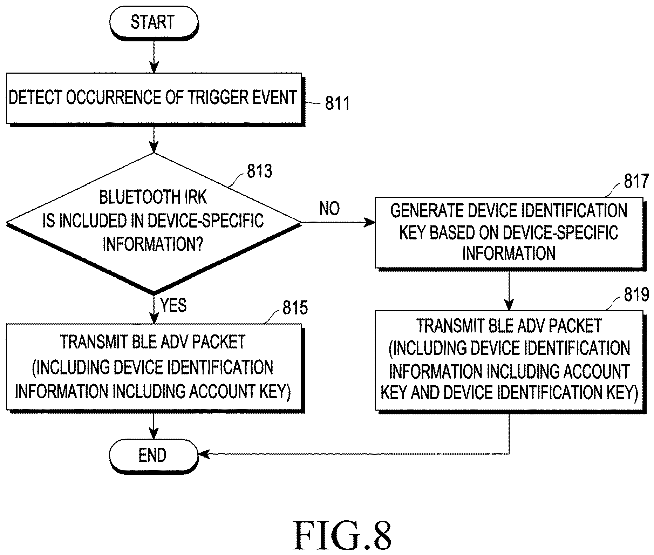

FIG. 8 is a flowchart illustrating an electronic device method for performing an advertisement procedure in a wireless communication network according to an embodiment.

Referring to FIG. 8, in operation 811, an electronic device (e.g., an electronic device 101 in FIG. 1, an electronic device 301 in FIG. 3, and a first electronic device 601 in FIG. 6) may detect occurrence of a trigger event for transmitting an advertisement packet, e.g., a BLE ADV packet.

In operation 813, the electronic device may check (or may determine) whether a Bluetooth™ IRK is included in device-specific information of the electronic device, e.g., unique information of the electronic device which the electronic device shares with an external electronic device. There is no limitation on a scheme in which the electronic device shares the unique information of the electronic device with the external electronic device, and there is also no limitation on the external electronic device which shares the unique information of the electronic device. For example, as described with reference to FIG. 7 above, the electronic device may transmit the device-specific information of the electronic device to a server (e.g., a server 108 in FIG. 1 or a server 310 in FIG. 3) during a procedure for receiving account information from the server. For another example, the electronic device may exchange the device-specific information of the electronic device with the external electronic device while establishing a direct connection with the external electronic device. For still another example, the electronic device may exchange the device-specific information of the electronic device with the external electronic device while establishing a connection with the external electronic device in the same access point environment.

The electronic device may generate the unique information of the electronic device, and in operation 813, check whether a Bluetooth™ IRK is included in the generated device-specific information. For example, upon generating the device-specific information of the electronic device while performing the procedure for receiving the account information from the server as described in FIG. 7, if the electronic device stores the Bluetooth™ IRK, the electronic device may generate the device-specific information including the Bluetooth™ IRK, and if the electronic device does not store the Bluetooth™ IRK, the electronic device may generate the device-specific information not including the Bluetooth™ IRK.

As a result of the check in operation 813, if the Bluetooth™ IRK is included in the device-specific information of the electronic device, for example, the unique information of the electronic device which the electronic device shares with the external electronic device, the electronic device may transmit a BLE ADV packet including device identification information including an account key of an account that the electronic device uses for registration in operation 815. For example, in operation 815, the electronic device may broadcast the BLE ADV packet.

As a result of the check in operation 813, if the Bluetooth™ IRK is not included in the device-specific information of the electronic device, for example, the unique information of the electronic device which the electronic device shares with the external electronic device, the electronic device may generate a device key based on the device-specific information, e.g., a key source (e.g., a Bluetooth™ MAC address) of the electronic device, in operation 817. In operation 817, the electronic device may generate an encryption key based on the device key and may generate a device identification key based on the generated encryption key.

In FIG. 8, a case in which the electronic device generates the device identification key after detecting the occurrence of the trigger event has been described as an example, however, the electronic device may generate the device identification key in advance, regardless of detecting the occurrence of the trigger event. If the device identification key is generated in advance, the electronic device may directly perform operation 819, without performing operation 817.

In step 819, the electronic device may transmit (e.g., broadcast) a BLE ADV packet including device identification information including the account key of the account that the electronic device uses for registration and the device identification key.

As described in FIG. 8, the device identification information included in the BLE ADV packet may vary according to whether the Bluetooth™ IRK of the electronic device is included in the device-specific information of the electronic device, e.g., the unique information of the electronic device that the electronic device shares with the external electronic device.

If the device-specific information of the electronic device includes the Bluetooth™ IRK of the electronic device, the device identification information included in the BLE ADV packet may include an account key of the account which the electronic device uses for registration.

If the device-specific information of the electronic device does not include the Bluetooth™ IRK of the electronic device, the device identification information included in the BLE ADV packet may include the account key of the account that the electronic device uses for registration and the device identification key.

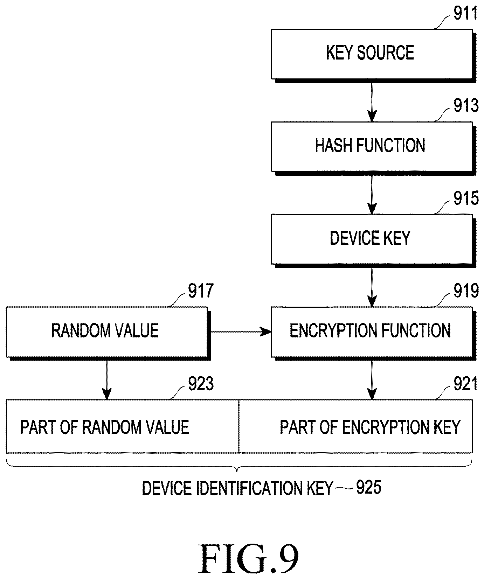

FIG. 9 illustrates generation of a device identification key in a wireless communication network according to an embodiment.

Referring to FIG. 9, an electronic device (e.g., an electronic device 101 and an electronic device 102 in FIG. 1, a first electronic device 301 to a fourth electronic device 304 in FIG. 3, and a first electronic device 601 and a second electronic device 602 in FIG. 6) may generate device identification information for uniquely identifying the electronic device itself among a plurality of electronic devices, e.g., same account devices, which are registered using the same account. The device identification information may include an account key. The device identification information may include the account key and/or a device identification key.

The electronic device may generate a device key 915 by applying a key source 911 to a hash function 913, e.g., SHA-256 which is one of secure hash algorithms (SHAs). The key source 911 may be one of various information included in device-specific information of the electronic device, and may be, for example, a Bluetooth™ MAC address. The electronic device may generate the device key 915 by applying the Bluetooth™ MAC address of the electronic device to one of other algorithms, e.g., hash-based message authentication code (HMAC)-SHA-256, or a P-192 elliptic curve which is an elliptic curve cryptography (ECC).

The electronic device may generate a random number 917, and generate an encryption key by applying an encryption function 919, e.g., one of an advanced encryption standard (AES) 128 electronic code block (ECB) or AES 256 to the random value 917 and the device key 915.

The electronic device may generate a device identification key 925 by combining, e.g., by concatenating, a part 921 of the encryption key and a part 923 of the random value 917. The electronic device may generate the device identification key 925 by combining, e.g., by concatenating, the encryption key and the random value. A first number of bits from a least significant bit (LSB) of the encryption key, e.g., the part 921 of the encryption key, and a first number of bits from an LSB of the random value 917, e.g., the part 923 of the random value 917, may be combined to generate the device identification key 925. The first number of bits from the LSB of the random value 917 may be a first number of bits from a most significant bit (MSB) of the device identification key 925 and the first number of bits from the LSB of the encryption key may be a first number of bits from an LSB of the device identification key 925.

A plurality of electronic devices registered using the same account in a wireless communication network may know, in advance, or based on agreement among the electronic devices, information related to a scheme of generating a device identification key as described in FIG. 9, e.g., a hash function and an encryption function which are used for generating the device identification key, a kind of information used for generating the device identification key among information included in device-specific information, the number of bits used as the device identification key among a random value, and the number of bits used as the device identification key among an encryption key. The information related to the scheme of generating the device identification key may be transmitted through a BLE ADV packet. However, the information related to the scheme of generating the device identification key may be transmitted in any form which may be shared by the plurality of electronic devices as well as the BLE ADV packet.

Although FIG. 9 illustrates an example in which the device identification key 925 is generated by concatenating the part 921 of the encryption key and the part 923 of the random value 917, the disclosure is not limited thereto, and there may be various schemes for generating the device identification key 925 based on the encryption key and the random value 917.

The electronic device may set the key source 911 to the Bluetooth™ MAC address, e.g., A0:C5:89:AE:6F:7C, of the electronic device. The electronic device may generate the device key 915 by applying the hash function 913, e.g., the SHA-256, to the Bluetooth™ MAC address (e.g., A0:C5:89:AE:6F:7C) 911 of the electronic device. The device key 915, which is generated by applying the hash function 913, e.g., the SHA-256, to the Bluetooth™ MAC address 911 of the electronic device may be expressed as shown in Equation (1) below.

<Equation 1>

$$SHA256(A0C589AE6F7C) =$$
$$5B6DBA76BCCF3BCCA31D6225AB54EB5C525A9B0A4F37C1A2EBC3C8A198$$
$$CCD60B$$

In Equation (1), the device key 915 is "5B6DBA76BCCF3BCCA31D6225AB54EB5C525A9B0A4F37C1A2EBC3C8A19 8CCD60B".

The electronic device may generate the random value 917, and the generated random value 917 may be expressed as shown in Equation (2) below.

<Equation 2>

$$\mathrm{RANDOM} = 19FCF8D2B5381F5BB6D6EA61BB4E7048$$

The electronic device may generate the encryption key by applying the encryption function 919, e.g., the AES 128 ECB, to the device key 915 and the random value 917. For example, if the random value 917 is "000000000000000000000000004E7048" and the device key 915 is "5B6DBA76BCCF3BCCA31D6225AB54EB5C525A9B0A4F37C1A2EBC3C8A19 8CCD60B", the electronic device may generate the encryption key by applying the AES128 ECB to a part of the device key 915 and the random value 917 as shown in Equation (3).

<Equation 3>

$$AES128\_ECB(5B6DBA76BCCF3BCCA31D6225AB54EB5C,$$
$$000000000000000000000000004E7048) \qquad\qquad =$$
$$BDB4D60FE39018D9D96FDA019EADF365$$

In Equation (3), the encryption key is "BDB4D60FE39018D9D96FDA019EADF365".

The electronic device may generate the device identification key 925 by combining, for example, by concatenating the part 921 of the encryption key and the part 923 of the random value 917. If the part 923 of the random value 917 is "4E7048" and the part 921 of the encryption key is "ADF365", the device identification key 925 may be generated as "4E7048ADF365".

The electronic device may include the generated device identification key 925 together with the account key in the device identification information, and the device identification information may be transmitted through the BLE ADV packet.

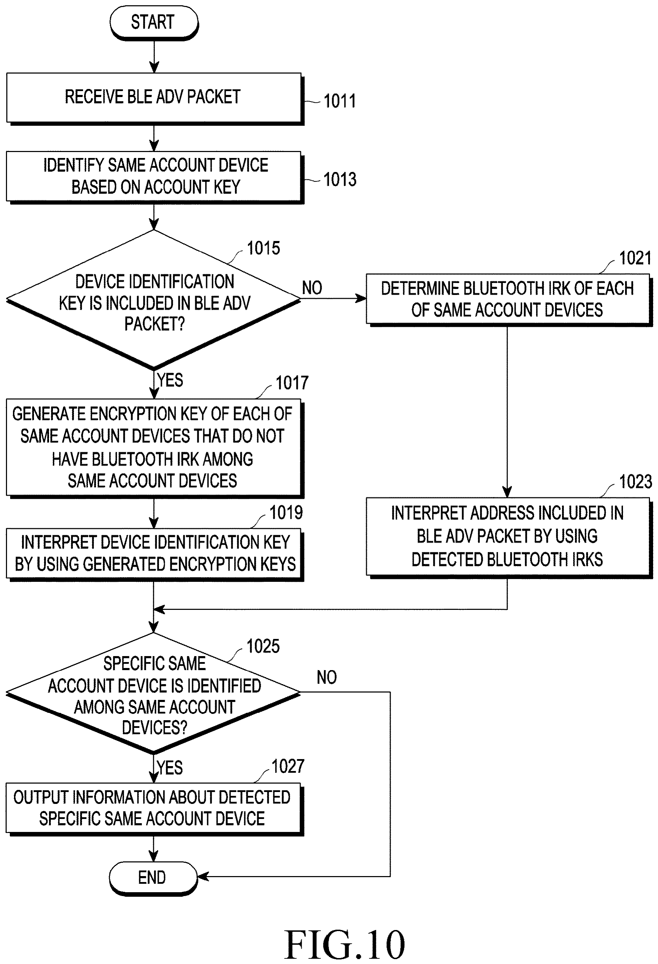

FIG. 10 is a flowchart illustrating an electronic device method for performing an advertisement procedure in a wireless communication network according to an embodiment.

Referring to FIG. 10, in operation 1011, an electronic device (e.g., an electronic device 102 in FIG. 1, a second electronic device 302 to a fourth electronic device 304 in FIG. 3, and a second electronic device in FIG. 6) may receive an advertisement packet, e.g., a BLE ADV packet, which is transmitted from an external electronic device (e.g., an electronic device 101 in FIG. 1, a first electronic device 301 in FIG. 3, and a first electronic device 601 in FIG. 6). Herein, it is assumed that the electronic device and the external electronic device are registered using the same account.

In operation 1013, the electronic device may detect an account key from the received BLE ADV packet, and if the detected account key is identical to an account key stored in the electronic device, the electronic device may identify that the external electronic device and the electronic device are registered using the same account.

In step 1015, the electronic device may check whether a device identification key is included in the received BLE ADV packet. As described above with reference to FIG. 8, while performing a procedure for receiving account information from a server, the external electronic device may transmit device-specific information of the external electronic device to the server, and device identification information included in the BLE ADV packet may vary depending on whether a Bluetooth™ IRK of the external electronic device is included in the device-specific information of the external electronic device transmitted to the server.

If the device-specific information of the external electronic device transmitted to the server includes the Bluetooth™ IRK of the external electronic device, the device identification information included in the BLE ADV packet may include an account key of an account which the external electronic device uses for registration.

If the device-specific information of the external electronic device transmitted to the server does not include the Bluetooth™ IRK of the external electronic device, the device identification information included in the BLE ADV packet may include the account key of the account which the external electronic device uses for registration and a device identification key. The device identification information included in the BLE ADV packet may vary depending on whether the Bluetooth™ IRK of the external electronic device is included in the device-specific information of the external electronic device transmitted to the server, the electronic device checks whether the device identification key is included in the received BLE ADV packet in operation 1015.

Two schemes for the electronic device to check whether the device identification key is included in the BLE ADV packet as provided below.

(1) <u>Fixed array scheme</u>

The electronic device may check whether the device identification key is included in the BLE ADV packet based on a value of a fixed array index included in the BLE ADV packet. The fixed array index may be included in a type field included in an AD element included in an AdvData field of the BLE ADV packet. The fixed array index may be implemented with 1 bit. If the value of the fixed array index is, e.g., "1", it may indicate that the device identification key is included in the BLE ADV packet, and if the value of the fixed array index is, e.g., "0", it may indicate that the device identification key is not included in the BLE ADV packet.

(2) Length, type, value (LTV) scheme

The electronic device may check whether the device identification key is included in the BLE ADV packet based on an LTV scheme. If a type of the LTV scheme is set to a value indicating that the device identification key is included in the BLE ADV packet, the electronic device may identify that the device identification key is included in the BLE ADV packet. If the type of the LTV scheme is not set to the value indicating that the device identification key is included in the BLE ADV packet, the electronic device may identify that the device identification key is not included in the BLE ADV packet.

If the device identification key is included in the received BLE ADV packet in step 1015, this may mean that the external electronic device that transmits the BLE ADV packet does not have a Bluetooth™ IRK. In operation 1017, the electronic device may identify external electronic devices that do not have the Bluetooth™ IRK among external electronic devices, e.g., same account devices, which are registered using the same account as the electronic device based on the account device list received from the server, and generate an encryption key for each of the external electronic devices which do not have the Bluetooth™ IRK based on a key source, e.g., a Bluetooth™ MAC address, of each of the external electronic devices which do not have the Bluetooth™ IRK.

In operation 1019, the electronic device mayinterpret the device identification key included in the received BLE ADV packet by using the encryption key generated for each of the external electronic devices that do not have the Bluetooth™ IRK among the external electronic devices registered using the same account as the electronic device. The electronic device may detect a first number of bits from an LSB of the device identification key included in the received BLE ADV packet as an encryption key of the external electronic device which transmits the BLE ADV packet. The electronic device may interpret the device identification key included in the received BLE ADV packet by comparing the encryption key generated for each of the external electronic devices which do not have the Bluetooth™ IRK with the encryption key of the external electronic device.

If there are the plurality of external electronic devices that do not have the Bluetooth™ IRK among the external electronic devices registered using the same account as the electronic device, for the device identification key included in the BLE ADV packet received from the external electronic device, the operation of comparing the detected encryption key and the generated encryption key as described above may be repeatedly performed by the number of the external electronic devices that do not have the Bluetooth™ IRK.

While repeatedly performing a comparison operation between the detected encryption key and the generated encryption key, a generated encryption key which is identical to the detected encryption key from the device identification key included in the BLE ADV packet received from the external electronic device may be detected. In this case, the external electronic device corresponding to the detected encryption key may be identified as the external electronic device that transmits the BLE ADV packet, and if the external electronic device that transmits the BLE ADV packet is identified, operation 1019 may not be performed any more.

If the device identification key is not included in the received BLE ADV packet in operation 1015, the electronic device may detect a Bluetooth™ IRK of each of external electronic devices from device-specific information of the external electronic devices included in the account device list received from the server in operation 1021.

In operation 1023, the electronic device may interpret, by using the detected Bluetooth™ IRKs, an address of the external electronic device that transmits the BLE ADV packet, included in the received BLE ADV packet.

That external electronic device that transmits the BLE ADV packet may generate the address of the external electronic device based on the Bluetooth™ IRK of the external electronic device, and this will be described in in more detail below.

The address of the external electronic device may be implemented as an RPA, which may be implemented with 48 bits. The RPA may be divided into a first part, e.g., a prand, which is a random part of 24 bits, and a second part, e.g., a hash, which is a hash part of 24 bits. A least significant octet of the RPA may be a least significant octet of the hash, and a most significant octet of the RPA may be a most significant octet of the prand.

A localHash value may be generated by using a random address hash function, e.g., ah. The localHash value may be expressed as shown in Equation (4) below.

<Equation 4>

$$localHash = ah(\text{IRK}, prand)$$

In Equation (4), IRK may represent a Bluetooth™ IRK of an electronic device, e.g., an external electronic device, which intends to generate the localHash, and prand may represent a prand value extracted from the RPA.

The localHash value is compared with a hash value extracted from an RPA included in the received BLE ADV packet, e.g., an RPA of the external electronic device, and if the localHash value matches the hash value extracted from the RPA of the external electronic device, the external electronic device that transmits the BLE ADV packet may be identified as an electronic device that has a Bluetooth™ IRK used when the localHash value is generated.

If a plurality of Bluetooth™ IRKs are included in device-specific information of electronic devices included in the account device list received by the electronic device from the server, the comparison operation between the hash value and the localHash value as described above may be repeated for the RPA included in the BLE ADV packet received from the external electronic device as many times as the number of Bluetooth™ IRKs.

If a localHash value which is identical to the hash value extracted from the RPA included in the BLE ADV packet received from the external electronic device is detected while repeatedly performing the comparison operation between the hash value and the localHash value, an external electronic device which has a Bluetooth™ IRK used for generating the detected localHash value may be identified as the external electronic device which transmits the BLE ADV packet, and if the external electronic device that transmits the BLE ADV packet is identified, operation 1023 may not be performed any more.

In step 1025, the electronic device may check whether the external electronic device, e.g., a specific same account device, which transmits the BLE ADV packet, is identified among the external electronic devices, e.g., same account devices, which are registered using the same account as the electronic device in operation 1025.

If the specific same account device that transmits the BLE ADV packet is identified among the same account devices registered using the same account as the electronic device in operation 1025, the electronic device may output information about the identified specific same account device through a user interface (UI) in operation 1027. The information about the identified specific same account device may include device-specific information of the specific same-account device, e.g., at least one of a name of the specific same-account device, a model name of the specific same-account device, a Wi-Fi MAC address of the specific same-account device, a Bluetooth™ MAC address of the specific same-account device, a serial number of the specific same-account device, a nickname of the specific same-account device, a type of the specific same-account device, an icon of the specific same-account device, an image of the specific same-account device, a description for the specific same-account device, location information of the specific same-account device, or a Bluetooth™ IRK of the specific same-account device.

In an embodiment, after performing operation 1025, as a result of the check, if the specific same account device which transmits the BLE ADV packet is not identified among the same account devices registered using the same account as the electronic device, the electronic device may re-request the account device list from the server. For example, the electronic device may receive a updated account device list from the server to perform an operation for finding the specific same account device.

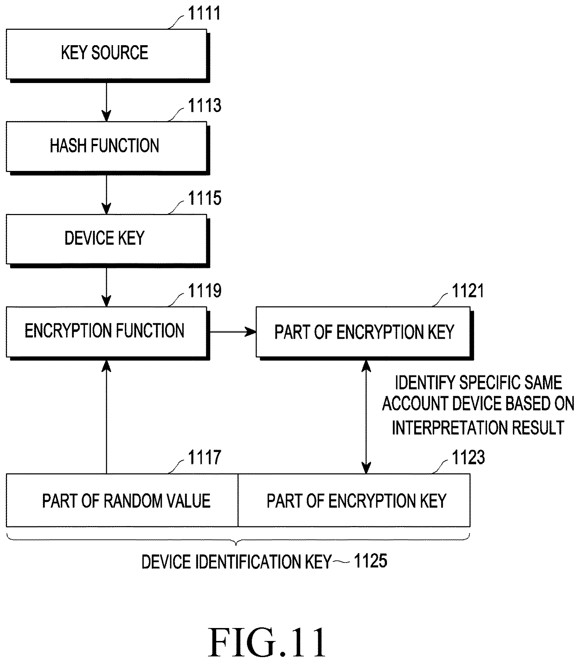

FIG. 11 illustrates interpreting a device identification key in a wireless communication network according to an embodiment.

Referring to FIG. 11, an electronic device (e.g., an electronic device 102 in FIG. 1, a second electronic device 302 to a fourth electronic device 304 in FIG. 3, and a second electronic device 602 in FIG. 6) may receive an advertisement packet, e.g., a BLE ADV packet transmitted from an external electronic device (e.g., an electronic device 101 in FIG. 1, a first electronic device 301 in FIG. 3, and a first electronic device 601 in FIG. 6).

The electronic device may detect device identification information from the received BLE ADV packet and check whether the detected device identification information includes a device identification key.

If the device identification key is included in the device identification information as a result of the check, the electronic device may perform an interpretation operation for the device identification key. Based on an account device list received from a server (e.g., a server 108 in FIG. 1 and a server 310 in FIG. 3), the electronic device may generate encryption key for each of external electronic devices, e.g., same account devices, which are registered using the same account as the electronic device, and interpret the device identification key included in the received BLE ADV packet by using the encryption key generated for each of the same account devices.

The electronic device may generate encryption keys for all of the same account devices to interpret the device identification key included in the received BLE ADV packet, and the electronic device may generate the encryption keys for all of the same account devices corresponding to an interpretation order. The interpretation order may be based on a distance between the electronic device and a same account device that is a target to be interpreted. For example, the electronic device may receive information about a location of each of the same account devices from the server, and when selecting the target to be interpreted, the electronic device may select the target to be interpreted based on a current location of the electronic device and the location of each of the same account devices.

The electronic device may perform an interpretation operation from a first same account device which is a first same account device determined among the same account devices. The electronic device may detect device-specific information of the first same account device from the account device list received from the server, and may detect a key source 1111, e.g., a Bluetooth™ MAC address 1111 of the first same account device, among the device-specific information of the first same account device. The electronic device may generate a device key 1115 of the first same account device by applying a set hash function 1113, e.g., SHA-256 to the Bluetooth™ MAC address 1111 of the first same account device.

The electronic device may detect a part 1117 of a random value that corresponds to the received BLE ADV packet, and detect the random value from the part 1117 of the random value. A device identification key 1125 included in the received BLE ADV packet may include a random value generated by the external electronic device which transmits the BLE ADV packet, e.g., a part of the random value, e.g., a first number of bits from an LSB of the random value, so the electronic device may detect the random value of the external electronic device based on the part of the random value.

The electronic device may apply an encryption function 1119, e.g., AES128 ECB, to the random value of the external electronic device and the device key 1115 of the first same account device to generate an encryption key of the first same account device.

The electronic device may detect a part 1123 of the encryption key that corresponds to the received BLE ADV packet. A device identification key 1125 included in the received BLE ADV packet may include the part 1123 of the encryption key, e.g., a first number of bits from an LSB of the encryption key, which is generated by the external electronic device that transmits the BLE ADV packet. The electronic device may compare the part 1123 of the encryption key of the external electronic device and a part 1121 of the encryption key of the first same account device, e.g., a first number of bits 1121 from an LSB of the encryption key of the first same account device.

If the part 1121 of the encryption key of the first same account device and the part 1123 of the encryption key of the external electronic device match, the electronic device may identify that the first same account device is the external electronic device.

If the part 1121 of the encryption key of the first same account device and the part 1123 of the encryption key of the external electronic device do not match, the electronic device may sequentially perform a device identification key interpretation operation on the remaining same account devices among the same account devices. If a part of an encryption key of a corresponding same account device and the part 1123 of the encryption key of the external electronic device match while performing the device identification key interpretation operation, the electronic device may identify that the corresponding same account device is the external electronic device.

A device identification key interpretation operation of an electronic device described in FIG. 11 will be described with reference to a specific example below.

It is assumed that an account device list received by an electronic device from a server includes device-specific information for a total of three same account devices, as follows:

    (1) First same account device

        Name: My Galaxy
        Type: phone
        Model name: SM-G998B
        Bluetooth™ IRK: 597E7C18295B677AB575B58679D381AD
        Bluetooth™ address: A0:C5:89:13:45:21
        Location information
        Icon

    (2) Second same account device

        Name: MARS-15
        Type: pc
        Model name: NT950QDB
        Bluetooth™ address: 51:54:7B:1F:4A:78
        Location information
        Icon

    (3) Third same account device

        Name: My Tab
        Type: tablet
        Model name: SM-T975B
        Bluetooth™ address: A0:C5:89:AE:6F:7C
        Location information

Icon

It also assumed that the BLE ADV packet received by the electronic device from the external electronic device includes a device identification key of the external electronic device, and that the device identification key of the external electronic device is "4E7048ADF365".

A fact that the device identification key is included in the received BLE ADV packet may indicate that the external electronic device that transmits the BLE ADV packet does not have a Bluetooth™ IRK. The electronic device may identify same account devices that do not have a Bluetooth™ IRK based on the account device list, and thus, may perform a device identification key interpretation operation on the same account devices that do not have the Bluetooth™ IRK.

The same account devices that do not have the Bluetooth™ IRK in the account device list are a second same account device and a third same account device, and the electronic device may perform, on the second same account device and the third same account device, a device identification key interpretation operation for identifying the external electronic device which transmits the BLE ADV packet.

If there are a plurality of same account devices on which the device identification key interpretation operation will be performed, the electronic device performs the device identification key interpretation operation on all of the plurality of same account devices, and in this case, the device identification key interpretation operation may be performed corresponding to an interpretation order.

The interpretation order may be based on a distance between the electronic device and a target same account device which is a target to be interpreted. The electronic device may detect a distance between each of the same account devices and the electronic device, determine a same account device having the shortest distance as a first target same account device, and sequentially perform the device identification key interpretation operation on the remaining target same account devices.

The second same account device and the third same account device do not have the Bluetooth™ IRK, so the electronic device may perform the device identification key interpretation operation on the second same account device and the third same account device. Herein, it is assumed that a distance between the second same account device and the electronic device is shorter than a distance between the third same account device and the electronic device, so the electronic device may determine the second same account device as the first target same account device.

The electronic device may apply a hash function, e.g., SHA-256 to a key source, e.g., a Bluetooth™ address (e.g., 51:54:7B:1F:4A:78), of the second same account device to generate a device key of the second same account device. The device key of the second same account device may be expressed as shown in Equation (5) below.

$$<\text{Equation 5}>$$
$$\text{SHA256}(\textbf{51547B1F4A78})$$
$$=597E7C18295B677AB575B58679D381AD31F8E48875A86750BE2AC595F0868$$
$$653$$

The electronic device may generate a random value (e.g., 00000000000000000000000004E7048) of the external electronic device based on a part (e.g., 4E7048) of the random value of the external electronic device included in a device identification key (e.g., 4E7048ADF365) of the external electronic device included in the received BLE ADV packet. The electronic device may apply an encryption function, e.g., AES128 ECB, to the random value of the external electronic device and a part (e.g., 597E7C18295B677AB575B58679D381AD) of the device key of the second same account device to generate an encryption key of the second same account device. The encryption key of the second same account device may be expressed as shown in Equation (6) below.

$$<\text{Equation 6}>$$
$$\text{AES128\_ECB}(597E7C18295B677AB575B58679D381AD,$$
$$00000000000000000000000004E7048) =$$
$$B93699EE493611B5429A53F885D0BACC$$

The electronic device may compare a part of the generated encryption key, for example, a first number of bits (e.g., D0BACC) from an LSB of the generated encryption key and a part (e.g., ADF365) of the encryption key of the external electronic device included in the device identification key (e.g., 4E7048ADF365) of the external electronic device included in the received BLE ADV packet.

As a result of the comparison, if the part of the generated encryption key does not match the part of the encryption key of the external electronic device, the electronic device may identify that the second same account device which corresponds to the generated encryption key is not the external electronic device which transmits the BLE ADV packet.

As it is identified that the second same account device is not the external electronic device that transmits the BLE ADV packet, the electronic device may perform the device key interpretation operation on the remaining same account device, e.g., the third same account device.

The electronic device may apply a hash function, e.g., SHA-256 to a key source, e.g., a Bluetooth™ address (e.g., A0:C5:89:AE:6F:7C) of the third same account device to generate a device key of the third same account device. The device key of the third same account device may be expressed as shown in Equation (7) below.

$$SHA256(\mathbf{A0C589AE6F7C}) =$$
$$5B6DBA76BCCF3BCCA31D6225AB54EB5C525A9B0A4F37C1A2$$
$$EBC3C8A198CCD60B$$

The electronic device may apply an encryption function, e.g., AES 128 ECB, to the random value (e.g., 00000000000000000000000004E7048) of the external electronic device and a part (e.g., 5B6DBA76BCCF3BCCA31D6225AB54EB5C) of the device key of the third same account device to generate an encryption key of the third same account device. The encryption key of the third same account device may be expressed as shown in Equation (8) below

$$<Equation\ 8>$$
$$AES128\_ECB(5B6DBA76BCCF3BCCA31D6225AB54EB5C,$$
$$00000000000000000000000004E7048) =$$
$$BDB4D60FE39018D9D96FDA019EADF365$$

The electronic device may compare a part of the generated encryption key, e.g.,,, a first number of bits (e.g., ADF365) from an LSB of the generated encryption key and a part (e.g., ADF365) of the encryption key of the external electronic device included in the device identification key (e.g., 4E7048ADF365) of the external electronic device included in the received BLE ADV packet.

As a result of the comparison, if the part of the generated encryption key matches the part of the encryption key of the external electronic device, the electronic device may identify that the third same account device which corresponds to the generated encryption key is the external electronic device that transmits the BLE ADV packet.

According to an embodiment of the disclosure, a method performed by an electronic device may include detecting that a trigger event which triggers advertisement packet transmission occurs, generating an advertisement packet including device identification information for identifying the electronic device and at least one external electronic device, registered using a same account, and transmitting the advertisement packet.

The method may further include receiving, from another external electronic device, an account device list including an account key of the same account and device-specific information of the at least one external electronic device.

The method may further include transmitting, to the other external electronic device, an IRK which is obtained according to performance of a pairing procedure of the electronic device.

The device identification information may include the account key.

The device identification information may include a device identification key which is generated based on the account key and device-specific information of the electronic device.

The method may further include generating a device key by applying a key source which is included in the device-specific information of the electronic device and used as a source for generating the device identification key to a hash function, applying the device key and a random number to an encryption function to generate an encryption key, and generating the device identification key based on the random value and the encryption key.

According to an embodiment of the disclosure, a method performed by an electronic device may include receiving an advertisement packet, detecting device identification information of an external electronic device which transmits the advertisement packet from the advertisement packet, checking whether an account used for registration of the electronic device is identical to an account used for registration of the external electronic device based on the device identification information, and if the account used for registration of the electronic device is identical to the account used for registration of the external electronic device, identifying that the external electronic device is one of at least one external electronic device registered using the same account based on the device identification information.

The method may further include receiving, from another external electronic device, an account device list including an account key of the same account and device-specific information of the at least one external electronic device.

Identifying that the external electronic device is one of the at least one external electronic device registered using the same account based on the device identification information may include checking whether a device identification key generated based on device-specific information of the external electronic device is included in the device identification information, if the device identification key of the external electronic device is not included in the device identification information, interpreting an address of the external electronic device included in the advertisement packet by using an IRK included in each of device-specific information of the at least one external electronic device, and if an IRK associated with the address of the external electronic device is detected, identifying an external electronic device which corresponds to the detected IRK among the at least one external electronic device as the external electronic device, and wherein each of IRKs of the at least one external electronic device is obtained according to performance of a pairing procedure of each of the at least one external electronic device.

Detecting the IRK associated with the address of the external electronic device may include, if a hash value generated by applying a part of the address of the external electronic device and the IRK of each of the at least one external electronic device to a hash function matches another part of the address of the external electronic device, determining that a corresponding IRK is associated with the address of the external electronic device.

The method may further include displaying device-specific information of the identified external electronic device.

Identifying that the external electronic device is one of the at least one external electronic device registered using the same account based on the device identification information may include checking whether a device identification key generated based on device-specific information of the external electronic device is included in the device identification information, if the device identification key of the external electronic device is included in the device identification information, generating a device key by applying, to a hash function, a key source which is included in device-specific information of each of the at least one external electronic device and used as a source for generating a device identification key of each of the at least one external electronic device, applying the generated device key and a random number to an encryption function to generate an encryption key, checking whether a part of the generated encryption key is identical to a part of an encryption key included in the device identification key in the device identification information, and if the part of the generated encryption key is identical to the part of the encryption key included in the device identification key in the device identification information, identify an external electronic device which corresponds to the generated encryption key as the external electronic device.

The method may further include displaying device-specific information of the identified external electronic device.

Checking whether the account used for registration of the electronic device is identical to the account used for registration of the external electronic device may include, if an account key included in the device identification information is identical to an account key of the account used for registration of the electronic device, determining that the account used for registration of the electronic device is identical to the account used for registration of the external electronic device.

The methods according to the present disclosure may be implemented in the form of hardware, software or a combination of hardware and software.

If the method is implemented in software, a non-transitory computer-readable storage medium storing one or more programs (software modules) may be provided. The one or more programs stored in the non-transitory computer-readable storage medium may be configured for execution by one or more processors within an electronic device (e.g., a UE or a server). The one or more programs may include instructions that enable the electronic device to execute the methods according to the present disclosure.

Such a program (software module or software) may be stored in nonvolatile memory including random access memory (RAM) and flash memory, ROM, electrically erasable programmable ROM (EEPROM), a magnetic disc storage device, CD-ROM, digital versatile discs (DVDs) or other forms of optical devices or a magnetic cassette. Alternatively, the program may be stored in memory consisting of some or all of the above. A plurality of each of the pieces of element memory may be included.

The program may be stored in an attachable storage device capable of accessing a communication network, such as the Internet, Intranet, a LAN, a wireless LAN (WLAN) or a storage area network (SAN) or a communication network consisting of a combination of the same. Such a storage device may be connected to a device capable of performing the present disclosure through an external port. A separate storage device over a communication network may be connected to a device that performs the present disclosure.

While the disclosure has been particularly shown and described with reference to certain embodiments thereof, it will be understood by those of ordinary skill in the art that various changes in form and details may be made therein without departing from the spirit and scope of the disclosure as defined by the appended claims and their equivalents.

**Claims**

1. An electronic device, comprising:

   a communication circuit; and
   at least one processor operatively connected to the communication circuit, wherein the at least one processor is configured to:

   detect a trigger event for advertisement packet transmission,
   in response to detecting the trigger event, generate an advertisement packet including device identification information for identifying the electronic device and at least one external electronic device registered using a same account, and
   transmit the advertisement packet via the communication circuit.

2. The electronic device of claim 1, wherein the at least one processor is further configured to receive, via the communication circuit, from another external electronic device, an account device list including an account key of the same account and device-specific information of the at least one external electronic device.

3. The electronic device of claim 2, wherein the at least one processor is further configured to transmit, via the communication circuit, to the other external electronic device, an identity resolving key (IRK) obtained according to performance of a pairing procedure of the electronic device.

4. The electronic device of claim 2, wherein the device identification information includes a device identification key that is generated based on the account key and device-specific information of the electronic device.

5. The electronic device of claim 4, wherein the at least one processor is configured to:

   generate a device key by applying a key source, which is included in the device-specific information of the electronic device and used as a source for generating the device identification key, to a hash function,
   apply the device key and a random number to an encryption function to generate an encryption key, and
   generate the device identification key based on the random value and the encryption key.

6. An electronic device, comprising:

   a communication circuit; and
   at least one processor operatively connected to the communication circuit, wherein the at least one processor is configured to:

   receive an advertisement packet via the communication circuit,
   detect device identification information of an external electronic device that transmits the advertisement packet from the advertisement packet,
   check whether an account used for registration of the electronic device is identical to an account used for registration of the external electronic device based on the device identification information, and
   if the account used for registration of the electronic device is identical to the account used for registration of the external electronic device, identify that the external electronic device is one of at least one external electronic device registered using a same account based on the device identification information.

7. The electronic device of claim 6, wherein the at least one processor is further configured to receive, via the communication circuit, from another external electronic device, an account device list including an account key of the same account and device-specific information of the at least one external electronic device.

8. The electronic device of claim 7, wherein the at least one processor is configured to:

   check whether a device identification key generated based on device-specific information of the external electronic device is included in the device identification information,
   if the device identification key of the external electronic device is not included in the device identification information, interpret an address of the external electronic device included in the advertisement packet by using an identity resolving key (IRK) included in each of device-specific information of the at least one external electronic device, and

if an IRK associated with the address of the external electronic device is detected, identify an external electronic device corresponding to the detected IRK among the at least one external electronic device as the external electronic device, and

wherein each of IRKs of the at least one external electronic device is obtained according to performance of a pairing procedure of each of the at least one external electronic device.

9. The electronic device of claim 8, wherein the at least one processor is configured to, if a hash value generated by applying a part of the address of the external electronic device and the IRK of each of the at least one external electronic device to a hash function matches another part of the address of the external electronic device, determine that a corresponding IRK is associated with the address of the external electronic device.

10. The electronic device of claim 8, further comprising a display module,
wherein the at least one processor is further configured to display device-specific information of the identified external electronic device via the display module.

11. The electronic device of claim 7, wherein the at least one processor is configured to:

check whether a device identification key generated based on device-specific information of the external electronic device is included in the device identification information,
if the device identification key of the external electronic device is included in the device identification information, generate a device key by applying, to a hash function, a key source which is included in device-specific information of each of the at least one external electronic device and used as a source for generating a device identification key of each of the at least one external electronic device,
apply the generated device key and a random number to an encryption function to generate an encryption key,
check whether a part of the generated encryption key is identical to a part of an encryption key included in the device identification key in the device identification information, and
if the part of the generated encryption key is identical to the part of the encryption key included in the device identification key in the device identification information, identify an external electronic device that corresponds to the generated encryption key as the external electronic device.

12. The electronic device of claim 11, further comprising a display module,
wherein the at least one processor is further configured to display device-specific information of the identified external electronic device via the display module.

13. The electronic device of claim 6, wherein the at least one processor is configured to, if an account key included in the device identification information is identical to an account key of the account used for registration of the electronic device, determine that the account used for registration of the electronic device is identical to the account used for registration of the external electronic device.

14. A method performed by an electronic device, the method comprising:

receiving an advertisement packet;
detecting, from the advertisement packet, device identification information of an external electronic device that transmits the advertisement packet;
determining whether an account used for registration of the electronic device is identical to an account used for registration of the external electronic device based on the device identification information; and
if the account used for registration of the electronic device is identical to the account used for registration of the external electronic device, identifying that the external electronic device is one of at least one external electronic device registered using a same account based on the device identification information.

15. The method of claim 14, further comprising receiving, from another external electronic device, an account device list including an account key of the same account and device-specific information of the at least one external electronic device.

FIG.1

EP 4 290 907 A1

201    201

COMMUNICATION CIRCUIT    202

PROCESSOR    204

MEMORY    206

INTERFACE MODULE    208

101

FIG.2

301

FIRST ELECTRONIC
DEVICE

304

FOURTH
ELECTRONIC DEVICE

310

SERVER

302

SECOND
ELECTRONIC DEVICE

303

THIRD ELECTRONIC
DEVICE

# FIG.3

| PREAMBLE (1 byte) /402 | ADVERTISING ACCESS ADDRESS (4 byte) /404 | PDU (2-39 bytes) /406 | CRC (3 byte) /408 |
|---|---|---|---|

| HEADER (2 byte) /410 | PAYLOAD ($\leq$37 bytes) /412 |
|---|---|

| AdvA (6 byte) /414 | AdvData (0-31 bytes) /416 |
|---|---|

| ADDRESS (6 byte) /418 | ADVERTISEMENT DATA (0-31 bytes) /420 |
|---|---|

400

| AD$_0$ /422 | . . . | AD$_n$ /426 |
|---|---|---|

| LENGTH /428 | TYPE /430 | AD DATA /432 |
|---|---|---|

FIG.4

501

FIRST ELECTRONIC
DEVICE

502

SECOND
ELECTRONIC DEVICE

RECEIVE ACCOUNT INFORMATION
(INCLUDING ACCOUNT KEY)
FROM SERVER — 511

RECEIVE ACCOUNT INFORMATION
(INCLUDING ACCOUNT KEY)
FROM SERVER — 513

DETECT THAT TRIGGER
EVENT OCCURS — 515

TRANSMIT BLE ADV PACKET
(INCLUDING ACCOUNT KEY) — 517

BLE ADV PACKET
(INCLUDING ACCOUNT KEY)
— 519

IDENTIFY SAME ACCOUNT DEVICE
BASED ON ACCOUNT KEY — 521

FIG.5

601
FIRST ELECTRONIC
DEVICE

602
SECOND
ELECTRONIC DEVICE

RECEIVE ACCOUNT INFORMATION
(INCLUDING ACCOUNT KEY AND
ACCOUNT DEVICE LIST) FROM SERVER — 611

RECEIVE ACCOUNT INFORMATION
(INCLUDING ACCOUNT KEY AND
ACCOUNT DEVICE LIST) FROM SERVER — 613

DETECT THAT TRIGGER EVENT OCCURS — 615

TRANSMIT BLE ADV PACKET (INCLUDING
DEVICE IDENTIFICATION INFORMATION) — 617

BLE ADV PACKET (INCLUDING
DEVICE IDENTIFICATION INFORMATION)
— 619

621 — IDENTIFY SAME ACCOUNT DEVICE
BASED ON ACCOUNT KEY

623 — IDENTIFY SPECIFIC SAME ACCOUNT
DEVICE AMONG SAME ACCOUNT DEVICES
BASED ON ACCOUNT DEVICE LIST AND
DEVICE IDENTIFICATION INFORMATION

FIG.6

START

LOG IN SERVER — 711

TRANSMIT USER-SPECIFIC
INFORMATION TO SERVER — 713

RECEIVE ACCOUNT KEY — 715

TRANSMIT DEVICE-SPECIFIC
INFORMATION TO SERVER — 717

RECEIVE ACCOUNT DEVICE
LIST FROM SERVER — 719

END

FIG.7

START

DETECT OCCURRENCE OF TRIGGER EVENT — 811

BLUETOOTH IRK
IS INCLUDED IN DEVICE-SPECIFIC
INFORMATION? — 813

NO → GENERATE DEVICE IDENTIFICATION
KEY BASED ON DEVICE-SPECIFIC
INFORMATION — 817

YES

TRANSMIT BLE ADV PACKET
(INCLUDING DEVICE IDENTIFICATION
INFORMATION INCLUDING ACCOUNT KEY) — 815

TRANSMIT BLE ADV PACKET
(INCLUDING DEVICE IDENTIFICATION
INFORMATION INCLUDING ACCOUNT
KEY AND DEVICE IDENTIFICATION KEY) — 819

END

# FIG.8

FIG.9

START

RECEIVE BLE ADV PACKET — 1011

IDENTIFY SAME ACCOUNT DEVICE BASED ON ACCOUNT KEY — 1013

1015
DEVICE IDENTIFICATION KEY IS INCLUDED IN BLE ADV PACKET?

NO → DETERMINE BLUETOOTH IRK OF EACH OF SAME ACCOUNT DEVICES — 1021

YES
GENERATE ENCRYPTION KEY OF EACH OF SAME ACCOUNT DEVICES THAT DO NOT HAVE BLUETOOTH IRK AMONG SAME ACCOUNT DEVICES — 1017

INTERPRET DEVICE IDENTIFICATION KEY BY USING GENERATED ENCRYPTION KEYS — 1019

INTERPRET ADDRESS INCLUDED IN BLE ADV PACKET BY USING DETECTED BLUETOOTH IRKS — 1023

1025
SPECIFIC SAME ACCOUNT DEVICE IS IDENTIFIED AMONG SAME ACCOUNT DEVICES?

NO →

YES
OUTPUT INFORMATION ABOUT DETECTED SPECIFIC SAME ACCOUNT DEVICE — 1027

END

FIG.10

1111

KEY SOURCE

1113

HASH FUNCTION

1115

DEVICE KEY

1119

ENCRYPTION FUNCTION

1121

PART OF ENCRYPTION KEY

IDENTIFY SPECIFIC SAME
ACCOUNT DEVICE BASED ON
INTERPRETATION RESULT

1117

PART OF RANDOM VALUE

1123

PART OF ENCRYPTION KEY

DEVICE IDENTIFICATION KEY~1125

FIG.11

## INTERNATIONAL SEARCH REPORT

| International application No. |
|---|
| **PCT/KR2022/004252** |

### A. CLASSIFICATION OF SUBJECT MATTER

**H04W 12/69**(2021.01)i; **H04W 12/04**(2009.01)i; **H04W 4/60**(2018.01)i; **H04W 4/80**(2018.01)i; **H04L 9/08**(2006.01)i; **H04L 9/06**(2006.01)i; **H04W 88/02**(2009.01)i

According to International Patent Classification (IPC) or to both national classification and IPC

### B. FIELDS SEARCHED

Minimum documentation searched (classification system followed by classification symbols)

H04W 12/69(2021.01); H04W 12/04(2009.01); H04W 12/08(2009.01); H04W 4/00(2009.01); H04W 4/06(2009.01); H04W 4/80(2018.01); H04W 76/10(2018.01); H04W 84/12(2009.01); H04W 84/20(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 광고(advertising), 동일(same), 계정(account), 키(key)

### C. DOCUMENTS CONSIDERED TO BE RELEVANT

| Category* | Citation of document, with indication, where appropriate, of the relevant passages | Relevant to claim No. |
|---|---|---|
| X | KR 10-2019-0001468 A (SAMSUNG ELECTRONICS CO., LTD.) 04 January 2019 (2019-01-04)<br>See paragraphs [0041]-[0060]; and claims 1-20. | 6,13-14 |
| Y | | 1-4,7,15 |
| A | | 5,8-12 |
| Y | US 10959099 B2 (SEGAL, Natalya) 23 March 2021 (2021-03-23)<br>See column 26, line 34 - column 27, line 27; and claims 1-20. | 1-4 |
| Y | KR 10-1870128 B1 (BARUN CORECHIPS CO., LTD.) 25 June 2018 (2018-06-25)<br>See paragraphs [0028]-[0031]; and claims 1-3, 5-7 and 9. | 2-4,7,15 |
| Y | CN 112351390 A (HUAWEI TECHNOLOGIES CO., LTD.) 09 February 2021 (2021-02-09)<br>See paragraphs [0004]-[0011]; and claims 1-32. | 3-4 |

☑ Further documents are listed in the continuation of Box C.    ☑ See patent family annex.

| | |
|---|---|
| *   Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **17 June 2022** | **17 June 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

## INTERNATIONAL SEARCH REPORT

| | International application No. |
|---|---|
| | **PCT/KR2022/004252** |

**C.      DOCUMENTS CONSIDERED TO BE RELEVANT**

| Category* | Citation of document, with indication, where appropriate, of the relevant passages | Relevant to claim No. |
|---|---|---|
| A | KR 10-1777052 B1 (IUCF-HYU (INDUSTRY-UNIVERSITY COOPERATION FOUNDATION HANYANG UNIVERSITY)) 11 September 2017 (2017-09-11) See paragraphs [0031]-[0038]; and claims 1 and 8-14. | 1-15 |

**INTERNATIONAL SEARCH REPORT**
Information on patent family members

International application No.

**PCT/KR2022/004252**

| Patent document cited in search report | | | Publication date (day/month/year) | Patent family member(s) | | | Publication date (day/month/year) |
|---|---|---|---|---|---|---|---|
| KR | 10-2019-0001468 | A | 04 January 2019 | EP | 3639538 | A1 | 22 April 2020 |
| | | | | EP | 3639538 | B1 | 12 January 2022 |
| | | | | US | 10911920 | B2 | 02 February 2021 |
| | | | | US | 2018-0376528 | A1 | 27 December 2018 |
| | | | | WO | 2019-004657 | A1 | 03 January 2019 |
| US | 10959099 | B2 | 23 March 2021 | US | 2020-0245147 | A1 | 30 July 2020 |
| KR | 10-1870128 | B1 | 25 June 2018 | None | | | |
| CN | 112351390 | A | 09 February 2021 | WO | 2021-027686 | A1 | 18 February 2021 |
| KR | 10-1777052 | B1 | 11 September 2017 | None | | | |

Form PCT/ISA/210 (patent family annex) (July 2019)